(19) Europäisches Patentamt
European Patent Office
Office européen des brevets

(11) **EP 4 124 891 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **22184129.9**

(22) Anmeldetag: **11.07.2022**

(51) Internationale Patentklassifikation (IPC):
**G01V 8/10** (2006.01)

(52) Gemeinsame Patentklassifikation (CPC):
**G01V 8/10**

(54) **OPTOELEKTRONISCHE SENSORANORDNUNG**

OPTOELECTRONIC SENSOR ASSEMBLY

DISPOSITIF CAPTEUR OPTOÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2021 DE 102021119680**

(43) Veröffentlichungstag der Anmeldung:
**01.02.2023 Patentblatt 2023/05**

(73) Patentinhaber: **SICK AG**
**79183 Waldkirch (DE)**

(72) Erfinder:
• **SPREEMANN, Dirk**
**79244 Münstertal (DE)**
• **POHL, Balazs**
**79183 Waldkirch (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
EP-B1- 3 390 964      DE-A1- 19 933 248
DE-A1-102010 023 359    DE-U1-202012 100 664

**Beschreibung**

Die vorliegende Erfindung betrifft eine optoelektronische Sensoranordnung mit einem Lichtsender zum Aussenden von Sendelichtsignalen in einen Überwachungsbereich, einer dem Lichtsender zugeordneten Sendeoptik zum Formen der Sendelichtsignale, einem ortsauflösenden Lichtempfänger zum Empfangen von Empfangslichtsignalen aus dem Überwachungsbereich, welche durch Remission von auf ein im Überwachungsbereich vorhandenes Objekt auftreffenden Sendelichtsignalen erzeugt werden, einer dem Lichtempfänger zugeordneten Empfangslichtoptik zum Formen der Empfangslichtsignale, wobei der Lichtsender und der Lichtempfänger in einer Versatzrichtung seitlich voneinander beabstandet angeordnet sind, und zumindest einem Optikträger, wobei die Sendeoptik und die Empfangsoptik lateral entlang der Versatzrichtung voneinander beabstandet an dem Optikträger angeordnet sind, wobei die Sendeoptik an einem eine Lichtaustrittsöffnung für die Sendelichtsignale aufweisenden Abschnitt des Optikträgers und die Empfangsoptik an einem eine Lichteintrittsöffnung für die Empfangslichtsignale aufweisenden Abschnitt des Optikträgers befestigt ist.

Bei einer derartigen optoelektronischen Sensoranordnung breiten sich die Sendelichtsignale auf einem Sendelichtpfad und die Empfangslichtsignale auf einem Empfangslichtpfad aus, wobei der Sendelichtpfad und der Empfangslichtpfad aufgrund der beabstandeten Anordnung des Lichtempfängers und des Lichtsenders einerseits und der Sendeoptik und der Empfangsoptik andererseits nicht zusammenfallen. Diese Konfiguration der Sensoranordnung wird auch als Biaxialanordnung bezeichnet. Die genannte Versatzrichtung definiert hier insbesondere eine Richtung oder Raumachse, die senkrecht zu dem Sendelichtpfad bzw. dem Empfangslichtpfad verläuft. Der Betrag des lateralen Versatzes zwischen der Sendeoptik und der Empfangsoptik kann auch als Basisabstand bezeichnet werden.

Gattungsgemäße Sensoranordnungen werden dazu verwendet, gegebenenfalls im Überwachungsbereich anwesende Objekte unter Berücksichtigung des Abstands des Objekts von der Sensoranordnung zu detektieren. Hierzu kann eine entsprechende Auswerteeinheit vorgesehen sein, welche zumindest mit dem Lichtempfänger verbunden ist und dazu eingerichtet ist, elektrische Empfangssignale, welche vom Lichtempfänger durch Umwandlung erfasster Empfangslichtsignale in elektrische Signale erzeugt wurden, zu verarbeiten und auf der Grundlage der elektrischen Empfangssignale ein Objekterfassungssignal zu erzeugen. Ein derartiges Objekterfassungssignal kann beispielsweise Informationen über dem genannten Abstand des Objekts umfassen oder es kann auf der Grundlage eines Vergleichs mit einem Abstandsschwellenwert erzeugt werden. Ein solcher Vergleich kann beispielsweise eine Prüfung umfassen, ob ein ermittelter Objektabstand größer oder kleiner ist als ein vorgegebener Abstandsschwellenwert oder ob der ermittelte Objektabstand innerhalb oder außerhalb eines vorgegebenen Abstandsbereichs liegt.

In einer beispielhaften Ausgestaltung kann die optoelektronische Sensoranordnung als Triangulationslichttaster ausgestaltet sein. Bei einem solchen nach dem Triangulationsprinzip arbeitenden Lichttaster besteht der Lichtempfänger bei bekannten Lösungen aus wenigstens einer Zeile von fotosensitiven Empfangselementen. In Abhängigkeit von der Entfernung zwischen der Sensoranordnung und dem remittierenden Objekt ändert sich die Position eines Lichtflecks, welcher von der Empfangsoptik durch Formen des remittierten, d.h. vom Objekt diffus oder spiegelnd reflektierten Lichts auf dem Lichtempfänger erzeugt wird, in der sogenannten Triangulationsrichtung. Zwischen dem Auftreffen auf dem Lichtempfänger und der Entfernung des erfassten Objekts besteht ein eindeutiger geometrischer Zusammenhang. Durch Auswertung der Lichtverteilung auf dem Lichtempfänger kann damit die Entfernung zwischen Objekt und Lichttaster bzw. Sensoranordnung bestimmt werden. Um insbesondere eine hohe Genauigkeit bei der Entfernungsbestimmung zu erreichen, sollte ein solcher Lichtempfänger eine Vielzahl fotosensitiver Empfangselemente aufweisen, die in der Triangulationsrichtung nebeneinander angeordnet sind.

In einer weiteren beispielhaften Ausgestaltung kann die Sensoranordnung als Lichtlaufzeitsensoranordnung oder TOF-Sensoranordnung (von englisch: time of flight) ausgebildet sein. Hierbei sind der Lichtsender und der Lichtempfänger mit einer kombinierten Auswerte- und Steuereinheit verbunden. Die Sendelichtsignale werden in Form von Lichtpulsen ausgesendet, wobei für einen jeweiligen Lichtpuls die Zeit gemessen wird, die dieser vom Lichtsender zum Objekt und vom Objekt zum Lichtempfänger benötigt. Diese Laufzeit ist direkt proportional zum Abstand des Objekts von der Sensoranordnung, wobei die Proportionalität durch die Lichtgeschwindigkeit als Proportionalitätskonstante bestimmt ist. Als Lichtempfänger können bei derartigen Lichtlaufzeitsensoranordnungen zweidimensional auflösende Sensoren eingesetzt werden, welche eine Vielzahl von in Reihen und Spalten angeordneten fotosensitiven Elementen aufweisen. Ein derartiger Lichtempfänger kann aber beispielsweise auch als Fotomischdetektor, auch als PMD-Sensor bezeichnet, ausgebildet sein. Auch bei derartigen Lichtlaufzeitsensoranordnungen können die Empfangslichtsignale mittels der Empfangsoptik zu einem vom Lichtempfänger erfassten Lichtfleck geformt werden. Zur Erhöhung des Signal-Rausch-Verhältnisses können diejenigen fotosensitiven Elemente von der Erzeugung eines Empfangssignals ausgeschlossen werden, welche nicht von dem Lichtfleck beleuchtet werden.

Die beiden genannten Ausgestaltungen der Sensoranordnung sind rein beispielhaft und schließen keinesfalls weitere mögliche Anwendungsfälle für die erfindungsgemäße optoelektronische Sensoranordnung aus.

Bei einer gattungsgemäßen Sensoranordnung können der Lichtsender und der Lichtempfänger separat oder auf einem gemeinsamen Trägermodul angeordnet sein.

Allerdings können bei derartigen Sensoranordnungen Temperaturänderungen zu Änderungen der geometrischen Verhältnisse führen. So definieren der Lichtsender, der Lichtempfänger, die Sendeoptik und die Empfangsoptik Eckpunkte eines Vierecks, beispielsweise eines Rechtecks oder allgemein eines Trapezes, wobei sich sowohl die Längenverhältnisse der durch die Eckpunkte definierten Kanten dieses Rechtecks als auch deren Winkel zueinander durch Temperatureinflüsse verändern können. Diese Änderungen der geometrischen Verhältnisse können zu Lagefehlern eines auf dem Lichtempfänger erzeugten Lichtflecks führen, die bis zu 1 mm bei einer Temperaturänderung von 1°C betragen können.

Ferner können auch die Brennweiten der Sendeoptik und der Empfangsoptik aufgrund der Temperaturänderungen variieren, was ebenfalls zu Lagefehlern führen kann, welche sich sowohl durch eine Verschiebung der Position als auch durch eine Größenänderung des Lichtflecks bemerkbar machen können.

Ein Ansatz zur Lösung dieser Problematik besteht darin, für den Optikträger, ein gegebenenfalls vorhandenes Trägermodul und/oder ein gegebenenfalls vorhandenes Optikgehäuse Materialien einzusetzen, die einen geringen thermischen Längenausdehnungskoeffizienten aufweisen. So können beispielsweise anstelle von Kunststoffen metallische Werkstoffe eingesetzt werden, die einen typischerweise um einen Faktor 3,5 geringeren Längenausdehnungskoeffizienten aufweisen. Beispielsweise weist eine typischerweise für Zinkdruckgussbauteile verwendete Zinklegierung einen Längenausdehnungskoeffizienten von $20 \cdot 10^{-6}/K$ auf, während für üblicherweise eingesetzte Kunststoffe der Längenausdehnungskoeffizienten ca. 70 bis $80 \cdot 10^{-6}/K$ betragen kann.

Allerdings lässt sich hierdurch der Lage- oder Positionsfehler auf dem Lichtempfänger nur um ein bestimmtes Maß reduzieren. Zudem erhöht die Verwendung von Metallen in der Regel die Produktionskosten in nicht unerheblicher Weise, sofern überhaupt aus technischen Gründen eine Substitution von Kunststoffen durch Metalle möglich ist.

In DE 199 33 248 A1 ist ein athermales Spiegelteleskop beschrieben. Aus EP 3 390 964 B1 ist ein Vermessungsinstrument mit einem optischen Träger zum Ausgleich von Temperaturschwankungen bekannt.

Es ist die Aufgabe der Erfindung, eine optoelektronische Sensoranordnung anzugeben, welche eine geringe Fehleranfälligkeit aufgrund von Temperaturänderungen aufweist.

Die Lösung der Aufgabe erfolgt durch eine optoelektronische Sensoranordnung mit den Merkmalen des Anspruchs 1. Es ist erfindungsgemäß vorgesehen, dass die Sendeoptik wenigstens ein Kompensationselement aufweist, welches zwischen der Sendeoptik und dem Lichtsender, zwischen der Empfangsoptik und dem Lichtempfänger, zwischen dem Optikträger und der Sendeoptik und/oder zwischen dem Optikträger und der Empfangsoptik wirkend angeordnet ist, wobei das zumindest eine Kompensationselement einen Längenausdehnungskoeffizienten aufweist und dazu eingerichtet ist, durch Temperaturänderungen der Sensoranordnung verursachte

(i) Änderungen des Abstands zwischen der Sendeoptik und dem Lichtsender,
(ii) Änderungen des Abstands zwischen der Empfangsoptik und dem Lichtempfänger,
(iii) Änderungen des Abstands zwischen dem Lichtsender und dem Lichtempfänger,
(iv) Änderungen des Abstands zwischen der Sendeoptik und der Empfangsoptik,
(v) Änderungen der Brennweite der Sendeoptik und/oder
(vi) Änderungen der Brennweite der Empfangsoptik

derart zu kompensieren, dass sich der Auftreffort und/oder die Größe eines Empfangslichtflecks, welcher von der Empfangsoptik aus den Empfangssignalen auf dem Lichtempfänger erzeugt wird, zumindest im Wesentlichen nicht ändert.

Die genannten Empfangslichtsignale sind Lichtsignale, welche von einem Objekt, welches auch ein Reflektor sein kann, durch Remission, d.h. insbesondere durch spiegelnde oder diffuse Reflektion, der Sendelichtsignale erzeugt werden. Die Sendeoptik bzw. die Empfangsoptik kann jeweils durch eine Einzellinse oder durch eine Linsenanordnung mit mehreren Linsen gebildet sein, wobei das Formen der Sende- bzw. Empfangslichtsignale durch Lichtbrechung erfolgt. Grundsätzlich sind auch andere Arten von Sende- oder Empfangsoptiken möglich, bei welchen beispielsweise das Formen der Lichtsignale durch Diffraktion erfolgt. Die genannte Versatzrichtung definiert einen Richtungsvektor im Raum, welcher den Versatz, d.h. einen räumlichen Abstand, zwischen dem Lichtsender und dem Lichtempfänger bzw. zwischen der Sendeoptik und der Empfangsoptik beschreibt. Die seitliche bzw. laterale Beabstandung des Lichtsenders und Lichtempfängers bzw. der Sende- und Empfangsoptik ist daher so zu verstehen, dass der Lichtsender und der Lichtempfänger bzw. die Sendeoptik und die Empfangsoptik in einer Richtung quer zu den Lichtpfaden der Empfangs- und Sendelichtsignale bzw. den jeweiligen optischen Achsen der Optiken bestandet zueinander angeordnet sind. Hierdurch wird nicht ausgeschlossen, dass die genannten Elemente zusätzlich auch einen Versatz in einer Längsrichtung der Lichtpfade zueinander aufweisen können. So müssen der Lichtsender und der Lichtempfänger nicht notwendigerweise in einer gemeinsamen Ebene, beispielsweise einer zur Haupterstreckungsebene eines den Lichtsender und den Lichtempfänger aufweisenden Trägermoduls, angeordnet sein, sondern können zum Beispiel bezogen auf die Haupterstreckungsebene eines Trägermoduls auch in verschiedenen, hierzu parallelen Ebenen angeordnet sein. Entsprechend müssen die Sende- und die Empfangsoptik nicht notwendigerweise in einer Haupterstreckungsebene des Optikträgers angeordnet sein, sondern können auch in hierzu parallelen voneinander verschiedenen Ebenen angeordnet sein. Dies kann insbesondere auch dadurch bedingt sein, dass die Sende- und/oder die Empfangsoptik zu Fokussierungszwecken längs ihrer optischen Achse versetzbar am Optikträger angeordnet sind.

Bei dem genannten ortsauflösenden Lichtempfänger kann eine Ortsauflösung sowohl in einer Dimension als auch in zwei Dimensionen gegeben sein. Ein Beispiel für einen in einer Dimension auflösenden Lichtempfänger ist ein Zeilensensor, also eine Zeile aus fotosensitiven Empfangselementen. Ein weiteres Beispiel ist ein sogenannter Zwei-Quadranten-Sensor. Beispiele für in zwei Dimensionen ortsauflösende Lichtempfänger sind beispielsweise Arrays mit in mehreren Spalten und Zeilen angeordneten fotosensitiven Elementen, beispielsweise CMOS- oder CCD-Bildsensoren, Vier-Quadranten-Sensoren oder Fotodiodenarrays. Ein weiteres Beispiel ist ein sogenannter PSD-Sensor (von englisch: position sensitive device), welcher im Gegensatz zu einem Array- oder Zeilensensor ein analoges Signal erzeugt, welches eine kontinuierliche Positionsinformation liefert.

Die Lichtaustritts- und Eintrittsöffnungen des Optikträgers definieren insbesondere jeweilige Befestigungspunkte für die Kompensationselemente, wobei beispielsweise eine mechanische Befestigung in Randbereichen der Lichtaustritts- bzw. Lichteintrittsöffnung erfolgen kann. Insbesondere definieren diese Lichtaustritts- bzw. Lichteintrittsöffnungen auch Referenzpunkte für die durch Temperaturänderungen verursachten Dimensionsänderungen des Optikträgers.

Bei den genannten Kompensationselementen handelt es sich um Komponenten der Sensoranordnung, welche ebenfalls einer thermisch bedingten Längenänderung unterworfen sind. Durch geeignete konstruktive Ausgestaltung und Anordnung der Kompensationselemente innerhalb der Sensoranordnung wirkt eine Längenänderung der Kompensationselemente jedoch einer Änderung eines zu kompensierenden Abstands entgegen. Die Kompensationselemente können bevorzugt als Halterungen, Fassungen oder Modulgehäuse für die jeweils zugeordnete Optik ausgebildet sein.

Bei dem genannten zumindest einen Optikträger kann es sich um einen gemeinsamen Optikträger für die Sendeoptik und die Empfangsoptik handeln. Alternativ kann auch für jede Optik ein separater Optikträger mit einem jeweiligem Frontbereich vorgesehen sein, beispielsweise ein erster Optikträger oder Sendeoptikträger, welcher die Lichtaustrittsöffnung und die Sendeoptik aufweist, und ein zweiter Optikträger oder Empfangsoptikträger, welcher die Empfangsoptik und die Lichteintrittsöffnung aufweist.

Mittels der Kompensationselemente können bei der erfindungsgemäßen Sensoranordnung somit eine beziehungsweise mehrere mögliche temperaturbedingte Abstandsänderungen und/oder Brennweitenänderungen ausgeglichen oder kompensiert werden, wobei die Kompensationselemente eine relative Bewegung oder Verschiebung der Sendeoptik und/oder der Empfangsoptik verursachen, die durch thermische Längen- und/oder Volumenänderungen des Optikträgers, eines Gehäuses und/oder eines Trägermoduls bedingten Abstandsänderungen und/oder Brennweitenänderungen entgegengerichtet sind. Die Kompensation der genannten Abstandsänderungen kann in einer Weise erfolgen, dass eine, mehrere oder alle Kanten des durch den Lichtsender- den Lichtempfänger, die Sendeoptik und die Empfangsoptik aufgespannten Vierecks sich in ihrer Länge zumindest im Wesentlichen nicht ändern und/oder dass zumindest eine jeweiliger zwischen zwei benachbarten Kanten eingeschlossener Winkel sich zumindest im Wesentlichen nicht ändert. Grundsätzlich ist es nicht notwendig, dass alle Abstandsänderungen und/oder Winkeländerungen vollständig kompensiert werden, sondern es kann auch ausreichen, dass bevorzugt solche Abstandsänderungen kompensiert werden, die tatsächlich auch Auswirkungen auf den Auftreffort und/oder die Größe des Empfangslichtflecks auf dem Lichtempfänger aufweisen. Die Vorgabe, wonach sich der Auftreffort und/oder die Größe des Empfangslichtflecks zumindest im Wesentlichen nicht ändert, ist an dieser Stelle so zu verstehen, dass beispielsweise im Rahmen von Fertigungstoleranzen oder auch geometrischen Einschränkungen eine gewisse minimale Verschiebung und/oder Defokussierung des Empfangslichtflecks auf dem Lichtempfänger toleriert werden kann. Ferner sollen auch solche Fälle umfasst sein, bei denen eine Kompensation der Abstandsänderungen nicht für die gesamte Tiefe des Überwachungsbereichs gewährleistet werden kann, sodass beispielsweise bei sehr nahen oder sehr weit entfernten Objekten bzw. Objektabständen eine durch Temperaturänderungen verursachte Verschiebung und/oder Defokussierung des Empfangslichtflecks größer sein kann als bei mittleren Objektabständen.

Es versteht sich, dass die Veränderungen des Abstands, die mittels der Kompensationselemente kompensiert werden, sich jeweils auf einen Auftreffort und bzw. die Größe eines Empfangslichtflecks für ein Objekt beziehen, dessen Abstand zur Sensoranordnung als konstant angenommen wird. Änderungen des Abstands zwischen dem Objekt und der Sensoranordnung können selbstverständlich Änderungen des Auftrefforts bzw. der Lichtfleckgröße zur Folge haben.

Gemäß einer bevorzugten Ausführungsform sind der Lichtsender und der Lichtempfänger auf einem gemeinsamen Trägermodul angeordnet, und die Sendeoptik ist über ein erstes Kompensationselement und die Empfangsoptik über ein zweites Kompensationselement an dem Optikträger befestigt, wobei die Kompensationselemente dazu eingerichtet sind, durch Temperaturänderungen der Sensoranordnung verursachte Änderungen des Abstands zwischen dem Trägermodul und dem Optikträger derart zu kompensieren, dass der Abstand zwischen dem Lichtsender und der Sendeoptik und der Abstand zwischen dem Lichtempfänger und der Empfangsoptik zumindest im Wesentlichen konstant bleibt. Die Kompensationselemente kompensieren somit Längenänderungen, die in Richtung des Sende- bzw. Empfangslichtpfads erfolgen. Die Kompensation dieser Abstandsänderungen zwischen dem Trägermodul und dem Optikträger sind besonders dazu geeignet, die Größe des Empfangslichtflecks bzw. die Fokuslage gegenüber Temperaturänderungen konstant zu halten. Das Merkmal, wonach der Abstand zwischen dem Lichtsender und der Sendeoptik und der Abstand zwischen dem Lichtempfänger und der Empfangsoptik zumindest im Wesentlichen konstant bleibt, ist hier auch so zu verstehen, dass ggf. temperaturbedingte Brennweitenänderungen der Optiken bei der Bemessung der Kompensation zusätzlich mit einbezogen werden können, so dass bei einer Berücksichtigung von Brennweitenänderungen sich die genannten Abstände auch geringfügig, d.h. um ein Maß der zu kompensierenden Brennweitenänderungen, vergrößern oder verkleinern können.

Alternativ oder zusätzlich sind die Kompensationselemente dazu eingerichtet, durch Temperaturänderungen der Sensoranordnung verursachte Änderungen des Abstands zwischen dem Lichtsender und dem Lichtempfänger und Änderungen des Abstands zwischen der Lichtaustrittsöffnung und der Lichteintrittsöffnung derart zu kompensieren, dass die Änderung des Abstands zwischen der Sendeoptik und der Empfangsoptik zumindest im Wesentlichen gleich den Änderungen des Abstands zwischen dem Lichtsender und dem Lichtempfänger sind. Hierdurch wird gewährleistet, dass der Sendelichtpfad und der Empfangslichtpfad auch bei Temperaturänderungen stets parallel bzw. unter einem unveränderlichen, vorgegebenen Winkel zueinander verlaufen. Hierbei kann der Sende- bzw. der Empfangslichtpfad durch eine jeweilige Symmetrieachse definiert sein, die durch die optische Achse der jeweiligen Optik oder auch durch eine Symmetrieachse zwischen einem Bezugspunkt des Lichtsenders bzw. des Lichtempfängers, beispielsweise einem geometrischen Mittelpunkt oder Symmetriepunkt, und einem Mittelpunkt der zugehörigen Optik bestimmt ist.

Unter der Annahme, dass sich zum Beispiel der Abstand zwischen dem Lichtsender und dem Lichtempfänger bei Temperaturänderungen nicht ändern würde, würde in dem Fall das Maß der Kompensation so gewählt, dass genau die Änderungen des Abstands zwischen der Lichtaustrittsöffnung und der Lichteintrittsöffnung kompensiert werden. Dies führt dazu, dass sich der Abstand zwischen der Sendeoptik und der Empfangsoptik nicht ändert.

In Abhängigkeit von konstruktiven Details, insbesondere bei Verwendung eines gemeinsamen Trägermoduls kann sich der Abstand zwischen dem Lichtsender und dem Lichtempfänger temperaturbedingt aber auch ändern, ohne dass eine Kompensation dieser Abstandsänderung möglich ist. Wenn dann zusätzlich die Änderungsraten, d.h. die jeweiligen relativen Längenänderungen bezogen auf eine Temperaturdifferenz, des Abstands zwischen Lichtsender und Lichtempfänger einerseits und Sendeoptik und Empfangsoptik andererseits unterschiedlich sind, würde sich ohne eine Kompensation der thermisch bedingten Abstandsänderungen der Winkel zwischen dem Sendelichtpfad und dem Empfangslichtpfad ändern. Um dies zu vermeiden, können die Kompensationselemente also so ausgelegt werden, dass der Abstand zwischen der Sendeoptik und der Empfangsoptik nicht konstant bleibt, sondern sich temperaturbedingt in dem gleichen Maße ändert wie der Abstand zwischen dem Lichtsender und dem Lichtempfänger.

Gemäß einer weiteren bevorzugten Ausführungsform ist das erste und/oder das zweite Kompensationselement aus einem Material hergestellt, dessen Längenausdehnungskoeffizient größer ist als der Längenausdehnungskoeffizient eines jeweiligen Materials, aus welchem das Trägermodul und/oder der Optikträger hergestellt ist. Grundsätzlich weisen die Bereiche, über welche temperaturbedingte Längenänderungen des Trägermoduls bzw. des Optikträgers Einfluss auf die maßgeblichen Abstände der Sensoranordnung haben, eine verhältnismäßig große Länge auf. Um eine kompakte Bauweise der Kompensationselemente zu ermöglichen, kann durch die Wahl eines Materials mit einem verhältnismäßig größeren Längenausdehnungskoeffizienten als das Material, dessen Längenausdehnung zu kompensieren ist, für das Kompensationselement eine kürzere Baulänge realisiert werden. Beispielhafte Materialien einschließlich der zugehörigen Parameter sind in der nachfolgenden Beschreibung der Ausführungsbeispiele genannt.

Gemäß einer weiteren bevorzugten Ausführungsform weist das erste und/oder das zweite Kompensationselement einen jeweiligen Axialkompensationsabschnitt auf, welcher längs einer optischen Achse der jeweiligen zugeordneten Optik wirksam ist, wobei bevorzugt der Axialkompensationsabschnitt eine zylindrische Form aufweist und mit einem umlaufenden Randabschnitt der zugeordneten Optik zusammenwirkt. Der genannte Axialkompensationsabschnitt ist somit in einer Richtung wirksam, welcher der Wirkrichtung der durch die Temperaturänderung verursachten Änderung des Abstands zwischen dem Trägermodul und dem Frontbereich entspricht. In der Regel kompensiert also der Axialkompensationsabschnitt Längenänderungen, die längs des Sendelichtpfads bzw. Empfangslichtpfads verlaufen. Durch die zylindrische Form des Axialkompensationsabschnitts ist eine gleichmäßige Veränderung des Abstands zwischen der zugeordneten Optik und dem Frontabschnitt möglich, wobei Verkippungen vermieden werden können. Der zylindrische Abschnitt kann gleichzeitig als Halterung oder Fassung für die zugeordnete Optik dienen. Dabei ist bevorzugt ein erstes axiales Ende des Axialkompensationsabschnitts mit der zugeordneten Optik verbunden und ein zweites axiales Ende des Axialkompensationsabschnitts mit einem die Lichtaustrittsöffnung bzw. die Lichteintrittsöffnung umgrenzenden Randabschnitt des Frontbereichs verbunden.

Gemäß einer weiteren bevorzugten Ausführungsform weist das erste und/oder das zweite Kompensationselement einen jeweiligen Lateralkompensationsabschnitt auf, welcher quer zu einer optischen Achse der jeweiligen zugeordneten Optik wirksam ist, wobei bevorzugt der Lateralkompensationsabschnitt sich nur über einen Bruchteil, bevorzugt über weniger als die Hälfte, besonders bevorzugt über weniger als ein Viertel des Umfangs eines umlaufenden Randabschnitts der zugeordneten Optik erstreckt. Der Lateralkompensationsabschnitt ist somit in einer Richtung wirksam, welcher der Wirkrichtung der durch die Temperaturänderung verursachten Änderung des Abstands zwischen dem Lichtsender und dem Lichtempfänger bzw. den Änderungen des Abstands zwischen der Lichtaustrittsöffnung und der Lichteintrittsöffnung entspricht. Die genannte Richtung, in der der Lateralkompensationsabschnitt wirksam ist, verläuft somit parallel bzw. antiparallel zur Versatzrichtung bzw. quer zum Sendelichtpfad bzw. Empfangslichtpfad. Beispielsweise können ein oder mehrere Federelemente vorgesehen sein, welche dem Lateralabschnitt gegenüberliegend am Umfang bzw. entlang des Umfangs verteilt angeordnet sein können, um die Optik zu fixieren oder abzustützen, d.h. die Optik wird einseitig schwimmend gelagert, um die nötige Versetzbarkeit zur Durchführung der durch das zugeordnete Kompensationselement vorgegebenen Bewegung relativ zum Optikträger zu gewährleisten.

Gemäß einer weiteren bevorzugten Ausführungsform ist vorgesehen, dass sich der Axialkompensationsabschnitt und der Lateralkompensationsabschnitt eines jeweiligen Kompensationselements hinsichtlich eines Längenausdehnungskoeffizienten und/oder einer Längenänderungsrate voneinander und/oder bezüglich eines Längenausdehnungskoeffizienten und/oder einer Längenänderungsrate des Axialkompensationsabschnitts und/oder des Lateralkompensationsabschnitts eines anderen Kompensationselements unterscheiden. Dies ermöglicht eine gute Abstimmung auf die jeweiligen durchaus unterschiedlichen Anforderungen hinsichtlich der Kompensationsfähigkeit in den verschiedenen Richtungen. Unter der Längenänderungsrate wird das Produkt aus dem Längenausdehnungskoeffizienten und der in Kompensationsrichtung wirksamen Länge des betreffenden Kompensationsabschnitts verstanden. Beispielsweise ist es möglich, dass der Axialkompensationsabschnitt und der Lateralkompensationsabschnitt eines bestimmten Kompensationselements aus unterschiedlichen Materialien mit unterschiedlichen Längenausdehnungskoeffizienten hergestellt sind. So muss ein jeweiliges Kompensationselement nicht zwingend einstückig ausgebildet sein, sondern kann auch eine mehrteilige Struktur aufweisen, wobei der Axialkompensationsabschnitt und der Lateralkompensationsabschnitt in geeigneter Weise miteinander verbunden werden können. So kann beispielsweise auch vorgesehen sein, dass die Sendeoptik bei einer gegebenen Temperaturänderung um eine größere Distanz relativ zum Frontbereich versetzt wird als die Empfangsoptik oder umgekehrt. Diese Wirkung kann durch eine unterschiedliche wirksame Länge, durch einen unterschiedlichen Längenausdehnungskoeffizienten oder auch durch eine Kombination aus beidem verwirklicht werden.

Gemäß einer weiteren bevorzugten Ausführungsform ist vorgesehen, dass der Lichtsender und die Sendeoptik in einem Sendemodulgehäuse angeordnet sind, wobei das Sendemodulgehäuse über ein zugeordnetes, als Sendemodul-Axialkompensationselement ausgebildetes Kompensationselement, welches längs einer optischen Achse der Sendeoptik wirksam ist, mit dem Lichtsender oder der Sendeoptik verbunden ist, und/oder dass der Lichtempfänger und die Empfangsoptik in einem Empfangsmodulgehäuse angeordnet sind, wobei das Empfangsmodulgehäuse über ein zugeordnetes, als Empfangsmodul-Axialkompensationselement ausgebildetes Kompensationselement, welches längs einer optischen Achse der Empfangsoptik wirksam ist, mit dem Lichtempfänger oder der Empfangsoptik verbunden ist, wobei bevorzugt das oder die Axialkompensationselemente aus einem Material hergestellt sind, dessen Längenausdehnungskoeffizient größer ist als der Längenausdehnungskoeffizient eines jeweiligen Materials, aus welchem das zugeordnete Modulgehäuse hergestellt ist. Bei dieser Ausgestaltung sind der Lichtsender und der Lichtempfänger nicht etwa an einem gemeinsamen Trägermodul angeordnet oder gehalten, sondern getrennt voneinander an dem jeweiligen Modulgehäuse. Hierdurch wird insbesondere auch eine Kompensation von Änderungen des Abstands zwischen dem Lichtsender und dem Lichtempfänger vereinfacht. Thermische bedingte Längenänderungen der Modulgehäuse und auch Brennweitenänderungen der zugeordneten Optiken werden durch die jeweiligen Axialkompensationselemente ausgeglichen.

Gemäß einer weiteren bevorzugten Ausführungsform ist vorgesehen, dass das Sendemodulgehäuse zumindest in Versatzrichtung starr bezüglich der Lichtaustrittsöffnung an dem Optikträger angeordnet ist und das Empfangsmodulgehäuse über ein zugeordnetes, als Lateralkompensationselement ausgebildetes Kompensationselement, welches quer zu einer optischen Achse der Empfangsoptik wirksam ist, derart beweglich an dem Optikträger angeordnet ist, dass das Lateralkompensationselement mittels einer durch die Temperaturänderungen der Sensoranordnung verursachten, in Versatzrichtung erfolgenden Relativbewegung zwischen der Empfangsoptik und der Lichteintrittsöffnung den Abstand zwischen der Sendeoptik und der Empfangsoptik zumindest im Wesentlichen konstant hält, oder dass das Empfangsmodulgehäuse zumindest in Versatzrichtung starr bezüglich der Lichteintrittsöffnung an dem Optikträger angeordnet ist und das Sendemodulgehäuse über ein zugeordnetes, als Lateralkompensationselement ausgebildetes Kompensationselement, welches quer zu einer optischen Achse der Sendeoptik wirksam ist, derart beweglich an dem Optikträger angeordnet ist, dass das Lateralkompensationselement mittels einer durch die Temperaturänderungen der Sensoranordnung verursachten, in Versatzrichtung erfolgenden Relativbewegung zwischen der Sendeoptik und der Lichtaustrittsöffnung den Abstand zwischen der Sendeoptik und der Empfangsoptik zumindest im Wesentlichen konstant hält, wobei bevorzugt das Lateralkompensationselement aus einem Material hergestellt ist, dessen Längenausdehnungskoeffizient größer ist als der Längenausdehnungskoeffizient eines Materials, aus welchem der Optikträger hergestellt ist. Durch die starre Verbindung zwischen dem Optikträger und dem Sendemodul bzw. dem Empfangsmodul erfolgt zumindest in Versatzrichtung keine Relativbewegung zwischen der Sendeoptik und der Lichtaustrittsöffnung bzw. der Empfangsoptik und der Lichteintrittsöffnung. Eine Kompensation einer lateralen Abstandsänderung erfolgt durch das jeweils andere Modul, welches beweglich an dem Optikträger angeordnet ist. Bei dieser Ausgestaltung wird zugleich auch der Abstand zwischen dem Lichtsender und dem Lichtempfänger zumindest im Wesentlichen konstant gehalten.

Bevorzugt ist das Lateralkompensationselement an wenigstens einem ersten Befestigungspunkt und an wenigstens einem in Versatzrichtung von dem ersten Befestigungspunkt beabstandeten zweiten Befestigungspunkt mit dem Optikträger verbunden, wobei eine Verbindung zwischen dem Lateralkompensationselement und dem Optikträger in dem ersten Befestigungspunkt zumindest in Versatzrichtung starr ist und in dem zweiten Befestigungspunkt eine durch Temperaturänderungen der Sensoranordnung verursachte Relativbewegung in Versatzrichtung zwischen dem Lateralkompensationselement und dem Optikträger zulässt. Das dem Lateralkompensationselement zugeordnete Modulgehäuse ist hierdurch sozusagen "schwimmend" an dem Optikträger gelagert.

Bevorzugt kann das Lateralkompensationselement durch einen Gehäuseabschnitt des zugeordneten Modulgehäuses gebildet sein. Bei dieser Ausgestaltung ist der genannte Gehäuseabschnitt oder auch das gesamte Sendemodulgehäuse bzw. das Empfangsmodulgehäuse bevorzugt aus einem Material hergestellt, dessen Längenausdehnungskoeffizient größer ist als der Längenausdehnungskoeffizient eines jeweiligen Materials, aus welchem der Optikträger hergestellt ist.

Die Lösung der Aufgabe der Erfindung erfolgt auch durch eine optoelektronische Sensoranordnung mit den Merkmalen des Anspruchs 11 und betrifft eine optoelektronische Sensoranordnung mit einem Lichtsender zum Aussenden von Sendelichtsignalen in einen Überwachungsbereich, einer dem Lichtsender zugeordneten Sendeoptik zum Formen der Sendelichtsignale, einem ortsauflösenden Lichtempfänger zum Empfangen von Empfangslichtsignalen aus dem Überwachungsbereich, welche durch Remission von auf ein im Überwachungsbereich vorhandenes Objekt auftreffenden Sendelichtsignalen erzeugt werden, einer dem Lichtempfänger zugeordneten Empfangsoptik zum Formen der Empfangslichtsignale, wobei der Lichtsender und der Lichtempfänger in einer Versatzrichtung seitlich voneinander beabstandet auf einem gemeinsamen Trägermodul angeordnet sind, und zumindest einem Optikgehäuse, welches mit dem Trägermodul über eine mechanische Kopplungsschnittstelle verbunden ist und einen Optikträger aufweist, wobei die Sendeoptik und die Empfangsoptik lateral entlang der Versatzrichtung voneinander beabstandet an dem Optikträger angeordnet sind. Der Optikträger ist insbesondere mit dem Optikgehäuse verbunden oder ein integraler Bestandteil des Optikgehäuses. Bei dieser Sensoranordnung ist erfindungsgemäß vorgesehen, dass die Kopplungsschnittstelle wenigstens einen ersten und wenigstens einen in Versatzrichtung von dem ersten Befestigungspunkt beabstandeten zweiten Befestigungspunkt umfasst, wobei eine Verbindung zwischen dem Trägermodul und dem zumindest einen Optikgehäuse in dem ersten Befestigungspunkt fest ist und in dem zweiten Befestigungspunkt eine durch Temperaturänderungen der Sensoranordnung verursachte Relativbewegung in Versatzrichtung zwischen dem Trägermodul und dem zumindest einen Optikgehäuse zulässt. Hierdurch wird eine Art schwimmende Befestigung des Optikgehäuses an dem Trägermodul realisiert. So können das Trägermodul und das oder die Optikgehäuse unterschiedliche thermische Längenausdehnungskoeffizienten aufweisen. Bei dieser Ausgestaltung sind somit der erste Befestigungspunkt als Festlager und der zweite Befestigungspunkt als Loslager ausgeführt. Bei einer vollständig festen oder starren Verbindung zwischen Trägermodul und Optikgehäuse würden hingegen Kräfte auftreten, die parallel zu einer Haupterstreckungsebene des Trägermoduls verlaufen und insbesondere in der Versatzrichtung wirksam sind. Diese Kräfte bewirken häufig eine bananenförmige Verbiegung eines Frontbereichs des Optikgehäuses bzw. des dort vorgesehenen Optikträgers, die eine konkave oder konvexe Wölbung des Frontbereichs bzw. des Optikträgers verursacht. Dies führt dazu, dass die Sendeoptik und/oder die Empfangsoptik verkippt werden, was Auswirkungen auf den Auftreffort und/oder die Fokuslage des Empfangslichtflecks zur Folge haben kann. Eine erfindungsgemäße Ausgestaltung mit den Merkmalen des Anspruches 11 vermeidet oder verringert diese Wirkung.

Bei dem genannten zumindest einen Optikgehäuse kann es sich um ein gemeinsames Optikgehäuse mit einem gemeinsamen Optikträger für die Sendeoptik und die Empfangsoptik handeln. Alternativ kann auch für jede Optik ein separates Optikgehäuse mit einem jeweiligem Optikträger vorgesehen sein, beispielsweise ein erstes Optikgehäuse oder Sendeoptikgehäuse, welches die Lichtaustrittsöffnung und die Sendeoptik aufweist, und ein zweites Optikgehäuse oder Empfangsoptikgehäuse, welches die Empfangsoptik und die Lichteintrittsöffnung aufweist.

Der erste und der zweite Befestigungspunkt sind bevorzugt an einander gegenüberliegenden Seiten des Trägermoduls bzw. des Optikgehäuses, bevorzugt an jeweiligen Randabschnitten, vorgesehen. Die im zweiten Befestigungspunkt vorhandene Beweglichkeit ist jedoch bevorzugt nur in Versatzrichtung gegeben, d.h. eine Bewegung, die den Abstand zwischen dem Trägermodul und dem Optikgehäuse verändern würde, ist in diesem Befestigungspunkt nicht zugelassen.

Gemäß einer bevorzugten Ausführungsform umfasst die Kopplungsschnittstelle mehrere erste und mehrere zweite Befestigungspunkte, wobei die ersten Befestigungspunkte ausschließlich senkrecht zur Versatzrichtung voneinander beabstandet sind und die zweiten Befestigungspunkte senkrecht zur Versatzrichtung und/oder in der Versatzrichtung voneinander beabstandet sind. Durch die Wahl weiterer Befestigungspunkte wird eine stabilere Verbindung zwischen dem Trägermodul und dem jeweiligen Optikgehäuse erreicht, ohne dass die Relativbewegung in Versatzrichtung eingeschränkt wird. Beispielsweise können für ein jeweiliges Optikgehäuse zwei erste und zwei zweite Befestigungspunkte vorgesehen sein. Zusätzlich können für dieses Optikgehäuse auch zwei weitere zweite Befestigungspunkte vorgesehen sein, die vorteilhafterweise zwischen den zwei ersten und den zwei erstgenannten zweiten Befestigungspunkten anordnet sind, so dass das Optikgehäuse insgesamt in sechs Punkten gelagert ist, von den zwei als Festlager und vier als Loslager ausgebildet sind. Hierdurch wird der Tatsache Rechnung getragen, dass das Trägermodul in der Regel in der Versatzrichtung eine wesentlich größere Ausdehnung hat als in der Querrichtung dazu. Damit wird eine noch stabilere Verbindung zwischen dem Trägermodul und dem Optikgehäuse bewirkt.

Gemäß einer weiteren bevorzugten Ausführungsform umfasst das zumindest eine Optikgehäuse ein die Sendeoptik aufnehmendes erstes Optikgehäuse mit einem ersten Optikträger und ein die Empfangsoptik aufnehmendes zweites Optikgehäuse mit einem zweiten Optikträger, wobei eine zwischen dem Trägermodul und den Optikgehäusen angeordnete Verbindungsplatte vorgesehen ist, wobei eine Verbindung zwischen dem Trägermodul und der Verbindungsplatte in dem zugeordneten ersten Befestigungspunkt fest oder starr ist und in dem zugeordneten zweiten Befestigungspunkt eine durch Temperaturänderungen der Sensoranordnung verursachte Relativbewegung in Versatzrichtung zwischen dem Trägermodul und der Verbindungsplatte zulässt, und wobei eine jeweilige Verbindung zwischen der Verbindungsplatte und dem jeweiligen Optikgehäuse in dem ersten zugeordneten Befestigungspunkt fest oder starr ist und in dem zweiten zugeordneten Befestigungspunkt eine durch Temperaturänderungen der Sensoranordnung verursachte Relativbewegung in Versatzrichtung zwischen der Verbindungsplatte und dem jeweiligen Optikgehäuse zulässt.

Gemäß einer weiteren bevorzugten Ausführungsform umfasst der wenigstens eine zweite Befestigungspunkt jeweils ein sich in Versatzrichtung erstreckendes Langloch, in welcher ein Zapfen in Versatzrichtung versetzbar aufgenommen ist. Hierbei gewährleistet das Langloch die gewünschte relative Verschiebbarkeit, während der Zapfen, insbesondere ein Pilzabschnitt oder in sonstiger Weise ausgestalteter Hintergreifungsabschnitt des Zapfens, das Optikgehäuse quer zur Haupterstreckungsebene des Trägermoduls an diesem festlegt. Hierbei kann das Langloch im Trägermodul und der Zapfen am Optikgehäuse angeordnet sein, wobei auch eine umgekehrte Ausgestaltung möglich ist. Zusätzlich kann der Zapfen im Langloch durch einen umlaufenden Kragen und/oder durch ein elastisches Fügematerial gesichert sein.

Gemäß einer besonders bevorzugten Ausführungsform wird die Aufgabe der Erfindung auch durch eine optoelektronische Sensoranordnung mit den Merkmalen der Ansprüche 1 und 11 in Kombination gelöst. Es hat sich gezeigt, dass die Kombination der Kompensation von Abstandsänderungen durch Kompensationselemente und die einseitig schwimmende Lagerung des Optikgehäuses am Trägermodul zu einer thermisch besonders stabilen Sensoranordnung führen, bei welcher Änderungen des Auftrefforts und/oder der Größe eines Empfangslichtflecks auf dem Lichtempfänger aufgrund von Temperaturänderungen minimiert sind.

In diesem Zusammenhang hat es sich als vorteilhaft erwiesen, wenn die Kompensationselemente ferner dazu eingerichtet sind, zusätzlich die durch Temperaturänderung der Sensoranordnung verursachte Relativbewegung zwischen dem Trägermodul und dem Optikträger zu berücksichtigen. Hier wird der Tatsache Rechnung getragen, dass sich der Optikträger bei einer gegebenen Temperaturänderung stärker, ggf. auch schwächer, ausdehnt bzw. zusammenzieht, als das Trägermodul. Diese Relativbewegungen werden bei der Auslegung der Kompensationselemente berücksichtigt.

Gemäß einer bevorzugten Ausführungsform einer der vorstehend genannten optoelektronischen Sensoranordnungen ist vorgesehen, dass der Lichtempfänger ein Array von Empfangselementen aufweist, welches sich zumindest in einer Triangulationsrichtung erstreckt, wobei die Empfangsoptik zum Erzeugen eines Lichtflecks aus den Empfangslichtsignalen auf dem Lichtempfänger eingerichtet ist, wobei sich die Position des Lichtflecks auf dem Lichtempfänger in der Triangulationsrichtung in Abhängigkeit von dem Abstand eines im Überwachungsbereich anwesenden Objekts zu der Sensoranordnung ergibt, und wobei die Sensoranordnung eine mit dem Lichtempfänger verbundene Auswerteeinheit umfasst, welche dazu eingerichtet ist, den Abstand des Objekts zu der Sensoranordnung auf der Grundlage der Position des Lichtflecks auf dem Lichtempfänger zu ermitteln, oder dass der Lichtsender dazu eingerichtet ist, die Sendelichtsignale in Form von Lichtpulsen auszusenden, wobei die Sensoranordnung eine mit dem Lichtsender und dem Lichtempfänger verbundene Auswerteeinheit umfasst, welche dazu eingerichtet ist, den Abstand des Objekts zu der Sensoranordnung auf der Grundlage der Laufzeit eines jeweiligen Lichtpulses zwischen dem Aussenden und dem Empfangen zu ermitteln. Bei der erstgenannten Alternative handelt es sich somit um eine Sensoranordnung nach dem Triangulationsprinzip. Die zweite Alternative bezieht sich auf eine Lichtlaufzeitsensoranordnung, wie sie ebenfalls eingangs näher erläutert wurde. Bei der genannten Auswerteeinheit kann es sich insbesondere auch um eine integrierte Auswerte- und Steuereinheit handeln. Es hat sich gezeigt, dass die vorliegende Erfindung sich für eine Anwendung bei Triangulationslichttastern oder bei Lichtlaufzeitsensoren in besonderer Weise eignet.

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1          eine schematische Querschnittsdarstellung einer optoelektronischen Sensoranordnung gemäß einem ersten Ausführungsbeispiel;

Fig. 2          eine schematische Draufsicht einer Kopplungsschnittstelle der Sensoranordnung von Fig. 1;

Fig. 3a und 3b     schematische Schnittdarstellungen der Sensoranordnung von Fig. 1 bei verschiedenen Temperaturen;

Fig. 4     eine schematische Schnittansicht eines Optikgehäuses bei verschiedenen Temperaturen;

Fig. 5     eine schematische Schnittdarstellung einer optoelektronischen Sensoranordnung gemäß einem zweiten Ausführungsbeispiel;

Fig. 6     eine schematische Schnittdarstellung eines Empfangsmoduls einer optoelektronischen Sensoranordnung gemäß einem dritten Ausführungsbeispiel;

Fig. 7     eine schematische Schnittdarstellung eines Sendemoduls einer optoelektronischen Sensoranordnung gemäß dem dritten Ausführungsbeispiel; und

Fig. 8     eine schematische Schnittdarstellung der optoelektronischen Sensoranordnung gemäß dem dritten Ausführungsbeispiel.

Im Folgenden werden für gleiche oder gleichartige Elemente oder Komponenten die gleichen Bezugszeichen verwendet. In den Figuren sind die Dimensionen und Abstände der verschiedenen Elemente und Komponenten nicht maßstabsgetreu und zur Verdeutlichung der erfindungsgemäßen Effekte zum Teil um ein Vielfaches vergrößert dargestellt.

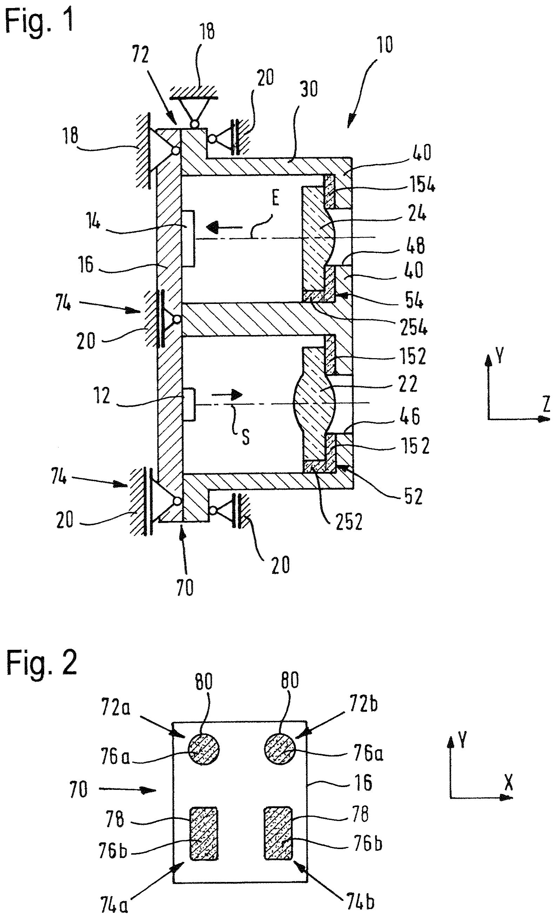

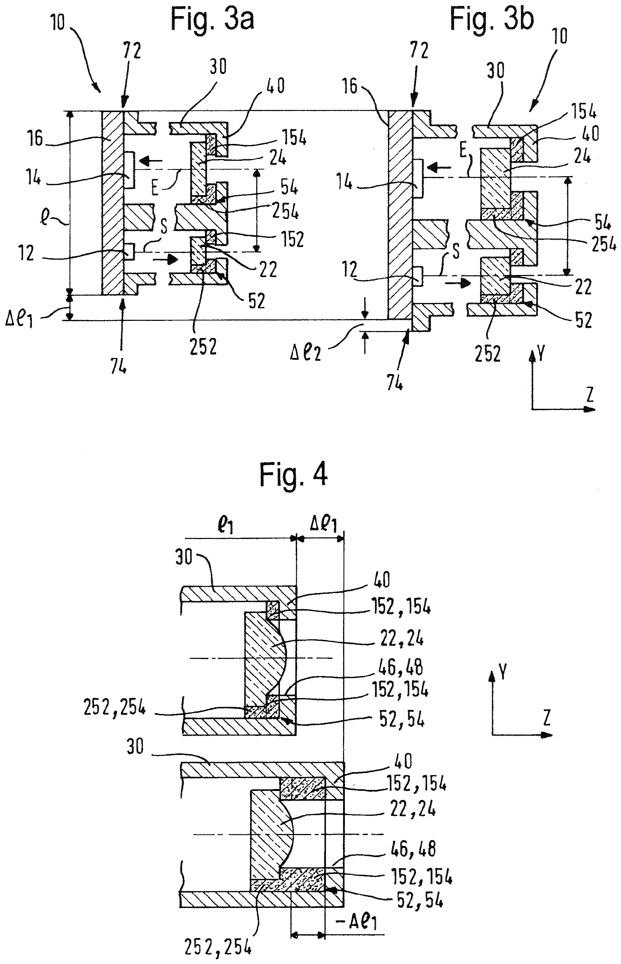

In Fig. 1, 3a und 3b ist eine optoelektronische Sensoranordnung 10 gemäß einem ersten Ausführungsbeispiel dargestellt, welche zum Beispiel als eine Sensoranordnung nach dem Triangulationsprinzip, z.B. als Triangulationslichttaster, oder als eine Lichtlaufzeitsensoranordnung ausgestaltet sein kann. Die Sensoranordnung 10 umfasst ein Trägermodul 16, auf dem entlang einer Versatzrichtung Y voneinander beabstandet ein Lichtsender 12 und ein Lichtempfänger 14 angeordnet sind. Das Trägermodul 16 kann beispielsweise als Elektronikkarte oder Leiterplatte ausgestaltet sein. Der Lichtsender 12 kann beispielsweise durch eine Leuchtdiode oder Laserdiode gebildet sein. Der Lichtempfänger 14 kann eine Vielzahl von lichtempfindlichen Elementen aufweisen, welche sich in einer oder in zwei Dimensionen erstrecken, wie es bereits in der Beschreibungseinleitung ausführlich beschrieben wurde.

Das Trägermodul 16 ist über eine nachfolgend noch näher beschriebene Kopplungsschnittstelle 70 mit einem Optikgehäuse 30 verbunden, in welchem eine dem Lichtsender 12 zugeordnete Sendeoptik 22 (hier einer entsprechend ausgestalteten Linse) und eine dem Lichtempfänger 14 zugeordnete Empfangsoptik 24 (hier einer entsprechend ausgestalteten Linse) angeordnet sind. Das Optikgehäuse 30 weist an seiner Frontseite, d.h. einer einem Überwachungsbereich zugeordneten Gehäuseseite, einen Optikträger 40 auf, welcher als ein separater, mit dem Optikgehäuse 30 verbundener Optikträger 40 ausgestaltet oder durch einen integralen Teilabschnitt des Optikgehäuses 30 gebildet sein kann.

Der Optikträger 40 weist eine Lichtaustrittsöffnung 46 für das vom Lichtsender 12 erzeugte, sich entlang eines Sendelichtpfads S ausbreitende Sendelicht und eine Lichteintrittsöffnung 48 für das vom Lichtempfänger 14 zu empfangende, sich entlang eines Empfangslichtpfads E ausbreitende Empfangslicht auf. Die Ausbreitungsrichtungen des Sendelichtes und des Empfangslichtes sind in den Figuren durch entsprechende Richtungspfeile gekennzeichnet. Der Sendelichtpfad S und der Empfangslichtpfad E verlaufen entlang einer zur Versatzrichtung Y senkrechten Axialrichtung Z. Die Lichtaustrittsöffnung 46 und die Lichteintrittsöffnung 48 sind ebenfalls entlang der Versatzrichtung Y voneinander beabstandet. Das Optikgehäuse 30 umschließt zusammen mit dem Trägermodul 16 den Lichtsender 12 und den Lichtempfänger 14 derart, dass mit Ausnahme des Sende- bzw. Empfangslichts kein Licht, insbesondere kein Fremdlicht, die Sensoranordnung 10 verlassen oder in diese eintreten kann. Zudem trennt das Optikgehäuse 30 den Sendelichtpfad S und den Empfangslichtpfad E voneinander.

An der Innenseite des Optikträgers 40, d.h. an der dem Trägermodul 16 zugewandten Seite, ist im Bereich der Lichteintrittsöffnung 48 ein erstes Kompensationselement 52 befestigt, welches hier auch als Halterung oder Träger für die Sendeoptik 22 dient. In entsprechender Weise ist im Bereich der Lichteintrittsöffnung 48 ein zweites Kompensationselement 54 befestigt, welches hier auch als Halterung oder Träger für die Empfangsoptik 24 dient. Jedes Kompensationselement 52, 54 weist einen bevorzugt zylindrischen Axialkompensationsabschnitt 152, 154 auf, welcher sich in der Axialrichtung Z zwischen dem Optikträger 40 und der Sendeoptik 22 bzw. der Empfangsoptik 24 erstreckt. Weiterhin weisen die Kompensationselemente 52, 54 einen jeweiligen Lateralkompensationsabschnitt 252, 254 auf, welcher sich in der Versatzrichtung Y zwischen einem jeweiligen Wandabschnitt des Optikgehäuses 30 und einem jeweiligen Randabschnitt der Sendeoptik 22 bzw. der Empfangsoptik 24 erstreckt. Die Lateralkompensationsabschnitte 252, 254 erstrecken sich bevorzugt nur über einen Teil des Umfangs der zugeordneten Optik 22, 24.

Die Materialien, aus denen die Komponenten der Sensoranordnung 10 hergestellt sind, weisen unterschiedliche thermische Längenausdehnungskoeffizienten auf. Im vorliegenden Ausführungsbeispiel wird beispielhaft angenommen, dass der Längenausdehnungskoeffizient des Optikgehäuses 30 größer ist als der Längenausdehnungskoeffizient des Trägermoduls 16, und dass die jeweiligen Längenausdehnungskoeffizienten der Kompensationselemente 52, 54 größer sind als der Längenausdehnungskoeffizient des Optikgehäuses 30. Weiterhin wird beispielhaft angenommen, dass die Längenausdehnungskoeffizienten des Optikträgers 40 und des Optikgehäuses 30 gleich sind oder sich nur geringfügig voneinander unterscheiden.

Mit Bezug auf Fig. 1, 2, 3a und 3b wird zunächst die Funktionsweise einer erfindungsgemäßen Ausgestaltung der Kopplungsschnittstelle 70 zwischen dem Trägermodul 16 und dem Optikgehäuse 30 näher erläutert. Das Optikgehäuse 30 ist in mehreren Befestigungspunkten 72, 74 (Fig. 1, 3a, 3b) mit dem Trägermodul 16 verbunden. In der Schnittdarstellung weist die Kopplungsschnittstelle 70 einen in einem empfängerseitigen Randbereich vorgesehenen ersten Befestigungspunkt 72 auf, an welchem das Trägermodul 16 und das Optikgehäuse 30 schematisch mit Hilfe von zwei Festlagern 18 und einem als Gegenlager für eines der Festlager 18 dienenden Loslager 20 fest beziehungsweise starr miteinander verbunden sind. An einem zweiten Befestigungspunkt 74 am senderseitigen Randabschnitt der Sensoranordnung 10 sind das Trägermodul 16 und das Optikgehäuse 30 schematisch mit Hilfe von zwei Loslagern 20 derart verbunden, dass die Verbindung in der Axialrichtung Z sowie in einer zur Versatzrichtung Y und zur Axialrichtung Z senkrecht verlaufenden Querrichtung X spielfrei ist, jedoch eine durch Temperaturänderungen der Sensoranordnung 10 verursachte Relativbewegung in der Versatzrichtung Y zwischen dem Trägermodul 16 und dem Optikgehäuse 30 zulässt. Ein zusätzlicher, schematisch ein weiteres Loslager 20 aufweisender weiterer zweiter Befestigungspunkt 74, der ebenfalls in der Axialrichtung Z und in der Querrichtung X spielfrei ist und in der Versatzrichtung Y eine Relativbewegung zulässt, kann zwischen dem Lichtsender 12 und dem Lichtempfänger 14 vorgesehen sein (in Fig. 2 nicht dargestellt). Die Darstellungen der Festlager 18 und der Loslager 20 sind - wie erwähnt - nur schematischer Natur und sollen rein beispielhaft verdeutlichen, auf welche Weise eine Ausgestaltung der Kopplungsschnittstelle 70 prinzipiell erfolgen kann, um die genannten ersten und zweiten Befestigungspunkte 72, 74 spielfrei bzw. spielbehaftet zu verwirklichen. Der Fachmann wird erkennen, dass spielfreie bzw. spielbehaftete Lagerpunkte zur Verwirklichung der ersten und zweiten Befestigungspunkte 72, 74 auch in konstruktiv abweichender Weise geschaffen werden können. Insbesondere können die Orte, an denen Festlager 18 bzw. Loslager 20 angeordnet werden, und/oder deren Anzahl auch in sinnvoller Weise variiert werden.

Die weitere Ausgestaltung der Kopplungsschnittstelle 70 wird schematisch mit Bezug auf Fig. 2 näher erläutert. Das in Draufsicht schematisch dargestellte Trägermodul 16 weist eine rechteckige Form auf, wobei die Erstreckung in der Versatzrichtung Y größer ist als in der Querrichtung X. Das Trägermodul 16 weist zwei in der Querrichtung X voneinander beabstandete kreisförmige Bohrungen 80 auf, in welchen jeweils ein am Optikgehäuse 30 angeordneter Zapfen 76a spielfrei aufgenommen ist. Die Bohrungen 80 und die Zapfen 76a definieren zwei erste Befestigungspunkte 72a, 72b.

Das Trägermodul 16 weist weiterhin zwei sich in der Versatzrichtung Y erstreckende Langlöcher 78 auf, welche in der Versatzrichtung Y beabstandet von den Bohrungen 80 angeordnet sind. In den Langlöchern 78 sind jeweilige Zapfen 76b aufgenommen, wobei ein Spiel lediglich in der Versatzrichtung Y vorgesehen ist, nicht jedoch in der Querrichtung X. Die Zapfen 76a, 76b können Hintergreifungsabschnitte aufweisen, welche eine Relativbewegung zwischen dem Optikgehäuse 30 und dem Trägermodul 16 in der Axialrichtung Z verhindern. Die Langlöcher 78 und die Zapfen 76b definieren somit zwei zweite Befestigungspunkte 74a, 74b. Da ein jeweiliger Abstand zwischen den Befestigungspunkten 72a, 72b, 74a, 74b in der Querrichtung X deutlich kleiner ist als in der Versatzrichtung Y, ist eine auch in der Querrichtung X bewegliche oder schwimmende Befestigung nicht erforderlich. Anstelle der Hintergreifungsabschnitte kann auch eine Fixierung der Zapfen 76a in den Bohrungen 80 mittels eines festen Klebstoffs und eine Fixierung der Zapfen 76b in den Langlöchern 78 mittels eines elastischen Klebstoffs vorgesehen sein, da die Relativbewegung in den zweiten Befestigungspunkten 74a, 74b entgegen der Dimensionen in Fig. 2 relativ klein ist.

Mit Bezug auf Fig. 3a und 3b wird nachfolgend der Vorteil der erfindungsgemäßen Ausgestaltung der Kopplungsschnittstelle 70 näher erläutert. Fig. 3a stellt die Sensoranordnung 10 bei einer niedrigen Bezugstemperatur dar, wobei sowohl das Trägermodul 16 als auch das Optikgehäuse 30 in der Versatzrichtung Y betrachtet eine Länge l aufweisen (in den Figuren als $\ell$ erkennbar). Nach einer Erwärmung der Sensoranordnung 10 auf eine höhere Temperatur als die Bezugstemperatur dehnt sich die Sensoranordnung 10 entsprechend den thermischen Längenausdehnungskoeffizienten der einzelnen Komponenten aus, wobei die Länge des Trägermoduls 16 sich um eine Längendifferenz $\Delta l_1$ erhöht und die Länge des Optikgehäuses 30 sich um eine Längendifferenz $\Delta l_1 + \Delta l_2$ erhöht (in den Figuren sind $\Delta l_1$ und $\Delta l_2$ als $\Delta\ell 1$ beziehungsweise $\Delta\ell 2$ erkennbar). Durch die erfindungsgemäße Ausgestaltung der Kopplungsschnittstelle 70 mit einer bezüglich der Versatzrichtung Y schwimmenden Lagerung im Bereich der zweiten Befestigungspunkte 74, 74a, 74b wird eine Relativbewegung zwischen dem Trägermodul 16 und dem Optikgehäuse 30 ermöglicht, wobei im vorliegenden Beispiel diese Relativbewegung eine Längendifferenz $\Delta l_2$ beträgt.

Bei einer allseits starren Befestigung zwischen dem Trägermodul 16 und dem Optikgehäuse 30 würde es ohne diese Möglichkeit des Längenausgleichs zu einer Verformung des Optikgehäuses 30 kommen, welche dazu führt, dass sich der mit dem Optikgehäuse 30 gekoppelte Optikträger 40 bananenförmig verbiegen würde. Diese Verbiegungen würden wegen der dadurch bedingten Verkippungen der Optiken 22, 24 dazu führen, dass sich ein Lichtauftreffpunkt eines Empfangslichtstrahls in der Versatzrichtung Y auf dem Lichtempfänger 14 verschiebt. Durch die beschriebene Ausgestaltung der Kopplungsschnittstelle 70 wird ein solcher Effekt wirkungsvoll vermieden.

Mit Bezug nun auf Fig. 3a, 3b und 4 wird nachfolgend die Wirkungsweise der Kompensationselemente 52, 54 erläutert. Die Kompensationselemente 52, 54 weisen einen jeweiligen Axialkompensationsabschnitt 152 bzw. 154, welcher in der Axialrichtung Z wirksam ist, und einen jeweiligen Lateralkompensationsabschnitt 252 bzw. 254 auf, welcher in der Versatzrichtung Y wirksam ist. Wenn sich die Temperatur der Sensoranordnung 10 erhöht, dehnen sich auch die Kompensationselemente 52, 54 aus, wobei diese aufgrund ihres höheren Längenausdehnungskoeffizienten die Sende- bzw. Empfangsoptik 22, 24 relativ zum Optikträger 40 sowohl entlang der Axialrichtung Z als auch der Versatzrichtung Y versetzen.

In Fig. 4 ist das Optikgehäuse 30 (im oberen Teil von Fig. 4 bei einer niedrigen ersten Temperatur und im unteren Teil von Fig. 4 bei einer höheren zweiten Temperatur) vereinfacht jeweils nur mit einer Optik 22, 24 dargestellt. Es versteht sich jedoch aufgrund der symmetrischen Ausgestaltung, dass sich das mit Bezug auf Fig. 4 erläuterte Wirkprinzip auf beide Teilbereiche des Optikgehäuses 30 übertragen lässt.

Wie in Fig. 4 dargestellt ist, vergrößert sich bei einer bestimmten Änderung der Temperatur der Sensoranordnung 10 eine Länge $l_1$ des Optikgehäuses 30, d.h. die Dimension des Optikgehäuses 30 in der Axialrichtung Z, um einen Betrag $\Delta l_1$. Das Material der Kompensationselemente 52, 54 sowie die Länge der Axialkompensationsabschnitte 152, 154 werden dabei so gewählt, dass sich die Axialkompensationsabschnitte 152, 154 ebenfalls um einen Betrag $\Delta l_1$ ausdehnen. Da die Wirkrichtung der Ausdehnung der Lateralkompensationsabschnitte 152, 154 der Längenänderung des Optikgehäuses 30 entgegengerichtet wirkt, ändert sich die Absolutposition der zugeordneten Optik 22, 24 nicht und der Abstand zwischen dem Sender 12 und der Sendeoptik 22 bzw. dem Empfänger 14 und der Empfangsoptik 24 bleibt konstant.

Hierbei wird vereinfachend angenommen, dass die Brennweiten der Sendeoptik 22 und der Empfangsoptik 24 konstant bleiben. Wie nachfolgend noch näher erläutert wird, kann sich jedoch bei einer Temperaturerhöhung auch die Brennweite einer Linse erhöhen oder verringern. Bei der Bemessung der Kompensationselemente 52, 54 kann dieser Effekt berücksichtigt werden, so dass diese Brennweitenänderung der zu kompensierenden Längenänderung des Optikgehäuses 30 noch hinzugerechnet werden muss.

Wie in Fig. 3a und 3b zu erkennen ist, bewirkt eine Temperaturerhöhung der Sensoranordnung 10 auch eine Vergrößerung des Abstands zwischen dem Lichtsender 12 und dem Lichtempfänger 14, welche bei diesem Ausführungsbeispiel nicht direkt kompensiert werden kann. Um die Auswirkungen auf die Relativposition eines von der Empfangsoptik 24 auf dem Lichtempfänger 14 erzeugten Lichtflecks dennoch möglichst gering zu halten, wird angestrebt, zumindest die Parallelität von Sendelichtpfad S und Empfangslichtpfad E, d.h. die Parallelität der jeweiligen zugeordneten Symmetrieachsen der Lichtpfade E, S, welche beispielsweise durch die Mittelpunkte des Lichtsenders 12 und der Empfangsoptik 22 bzw. durch die Mittelpunkte des Lichtempfängers 14 und der Empfangsoptik 24 definiert werden können, auch bei einer Temperaturänderung zu gewährleisten.

Bei einer Temperaturerhöhung der Sensoranordnung 10 dehnt sich auch der Optikträger 40 aus, wodurch sich sowohl die Position der Lichtaustrittsöffnung 46 als auch der Lichteintrittsöffnung 48 entgegen der durch den Pfeil gekennzeichneten Versatzrichtung Y verändert. Zudem vergrößert sich auch der Abstand zwischen der Sendeoptik 22 und der Empfangsoptik 24, der nachfolgend auch als Basisabstand bezeichnet wird. Zur Kompensation dieser Verschiebungen entlang der Versatzrichtung Y werden die Lateralkompensationsabschnitte 252, 254 der Kompensationselemente 52, 54 bezüglich der Wahl eines Materials mit einem geeigneten Längenausdehnungskoeffizienten und der Dimensionierung der in der Versatzrichtung Y wirksamen Länge so gewählt, dass bei einer Temperaturänderung der Sensoranordnung 10 die Sendeoptik 22 sich in dem gleichen Maße verschiebt wie der Lichtsender 12 und die Empfangsoptik 24 sich in dem gleichen Maße verschiebt wie der Lichtempfänger 14, so dass der Basisabstand zwischen der Sendeoptik 22 und der Empfangsoptik 24 zumindest im Wesentlichen dem Abstand zwischen dem Lichtsender 12 und dem Lichtempfänger 14 entspricht und sich somit die Lage der Symmetrieachsen des Sendelichtpfads S und des Empfangslichtpfads E zumindest bezüglich der Winkelposition, d.h. beispielsweise bezüglich der Winkel zwischen den Symmetrieachsen und dem Trägermodul 16, nicht ändert und auch die Parallelität zwischen beiden Symmetrieachsen erhalten bleibt.

Die Kompensationselemente 52, 54 können als integrierte Bauelemente hergestellt sein, wobei die Lateralkompensationsabschnitte 152, 154 sowie die Axialkompensationsabschnitte 252, 254 aus demselben Material hergestellt sein können. Alternativ können die Lateralkompensationsabschnitte 152, 154 einerseits und die Axialkompensationsabschnitte 252, 254 aus Materialien hergestellt sein, welche sich hinsichtlich ihrer thermischen Längenausdehnungskoeffizienten voneinander unterscheiden.

Gemäß einer Abwandlung ist es grundsätzlich auch möglich, am Trägermodul 16 ein Kompensationselement (nicht dargestellt) vorzusehen, welches den Abstand zwischen dem Lichtsender 12 und dem Lichtempfänger 14 thermisch konstant hält. Es versteht sich, dass in dem Fall die Kompensationselemente 52, 54 bzw. deren Lateralkompensationsabschnitte 252, 254 derart bemessen werden, dass auch der Basisabstand zwischen der Sendeoptik 22 und der Empfangsoptik 24 konstant bleibt.

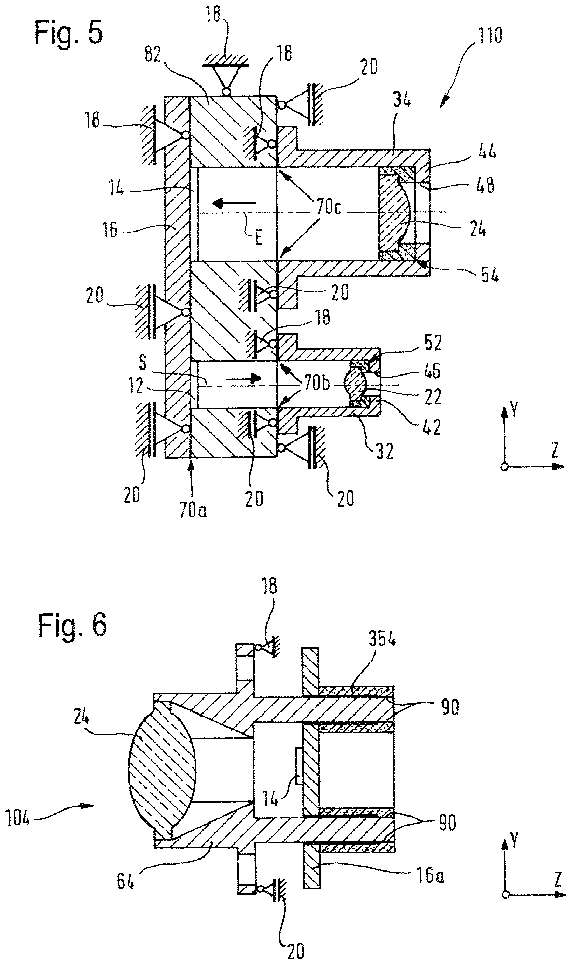

Mit Bezug nun auf Fig. 5 wird eine Sensoranordnung 110 gemäß einem zweiten Ausführungsbeispiel beschrieben. Da die Sensoranordnung 110 nach Fig. 5 im Prinzip eine Abwandlung der Sensoranordnung 10 nach den Fig. 1 bis 3b darstellt, werden nachfolgend nur die wesentlichen Unterschiede erläutert.

Anstelle des gemeinsamen Optikgehäuses 30 sind zwei separate Optikgehäuse 32, 34 vorgesehen, wobei in einem ersten Optikgehäuse 32 die Sendeoptik 22 und das Kompensationselement 52 und in einem zweiten Optikgehäuse 34 die Empfangsoptik 24 und das Kompensationselement 54 angeordnet sind. Das erste Optikgehäuse 32 weist einen ersten Optikträger 42 mit der Lichtaustrittsöffnung 46 und das zweite Optikgehäuse 34 einen zweiten Optikträger 44 mit der Lichteintrittsöffnung 48 auf.

Im Unterschied zum ersten Ausführungsbeispiel sind bei der Sensoranordnung 110 die Optikgehäuse 32, 34 nicht direkt mit dem Trägermodul 16 verbunden, sondern es ist eine Verbindungsplatte 82 vorgesehen, welche einerseits mit dem Trägermodul 16 und andererseits mit den Optikgehäusen 32, 34 verbunden ist. Die Kopplungsschnittstellen zwischen der Verbindungsplatte 82 und dem Trägermodul 16 bzw. den Optikgehäusen 32, 34 können jeweils entsprechend der mit Bezug auf Fig. 1 und 2 ausgestalteten Kopplungsschnittstelle 70 ausgebildet sein. So kann beispielsweise eine Kopplungsschnittstelle 70a zwischen dem Trägermodul 16 und der Verbindungsplatte 82 der Kopplungsschnittstelle 70 entsprechen, d.h. es sind in ebenfalls schematischer Weise entsprechend der Darstellung von Fig. 1 korrespondierende Festlager 18 und Loslager 20 vorgesehen. Eine Kopplungsschnittstelle 70b zwischen der Verbindungsplatte 82 und dem ersten Optikgehäuse 32 und eine Kopplungsschnittstelle 70c zwischen der Verbindungsplatte 82 und dem zweiten Optikgehäuse 34 können in entsprechender schematischer Weise mit einem jeweiligen Festlager 18 und einem jeweiligen Loslager 20 in der Querschnittsdarstellung ausgebildet sein. Die konstruktive Ausgestaltung der Kopplungsschnittstellen 70a bis 70c kann beispielsweise entsprechend der Ausgestaltung gemäß Fig. 2 ausgeführt sein. Insbesondere kann jede Kopplungsschnittstelle 70a - 70c mehrere erste und mehrere zweite Befestigungspunkte aufweisen.

Bevorzugt weist die Verbindungsplatte 82 den gleichen thermischen Längenausdehnungskoeffizienten wie das Trägermodul 16 auf. Ein Vorteil der Sensoranordnung 110 gemäß dem zweiten Ausführungsbeispiel gegenüber der Sensoranordnung 10 gemäß dem ersten Ausführungsbeispiel besteht darin, dass durch die weitergehende Untergliederung in mehrere Einzelkomponenten mit einer entsprechenden differenzierten Materialauswahl mit unterschiedlichen Längenausdehnungskoeffizienten die verschiedenen Komponenten, beispielsweise die Verbindungsplatte 82, die Optikgehäuse 32, 34 und die Optikträger 42, 44 bei der Kompensation der Längenausdehnungen in vielfältigerer Weise miteinbezogen werden können.

Mit Bezug nun auf Fig. 6 bis 8 wird eine optoelektronische Sensoranordnung 210 gemäß einem dritten Ausführungsbeispiel beschrieben. Im Unterschied zum ersten und zweiten Ausführungsbeispiel sind der Lichtsender 12 und der Lichtempfänger 14 nicht auf einem gemeinsamen Trägermodul 16 angeordnet, sondern sind Bestandteil eines jeweiligen Moduls 102, 104.

Gemäß Fig. 6 umfasst ein Empfangsmodul 104 ein tubusförmiges Empfangsmodulgehäuse 64, in dem die Empfangsoptik 24 und der Lichtempfänger 14 angeordnet sind. Der Lichtempfänger 14 ist auf einem Trägermodul 16a angeordnet, welches über ein Empfangsmodul-Axialkompensationselement 354 mit einem Endabschnitt des Empfangsmodulgehäuses 64 verbunden ist. Eine starre Verbindung zwischen dem Empfangsmodul-Axialkompensationselement 354 und dem Empfangsmodulgehäuse 64 besteht nur in einem endständigen Befestigungsbereich 90, so dass keine direkte starre Verbindung zwischen dem Trägermodul 16a und dem Empfangsmodulgehäuse 64 gegeben ist. Auf diese Weise ist gewährleistet, dass sich bei Temperaturänderungen das Trägermodul 16a mit dem Lichtempfänger 14 und das Empfangsmodulgehäuse 64 in der Axialrichtung Z relativ zueinander verschieben können.

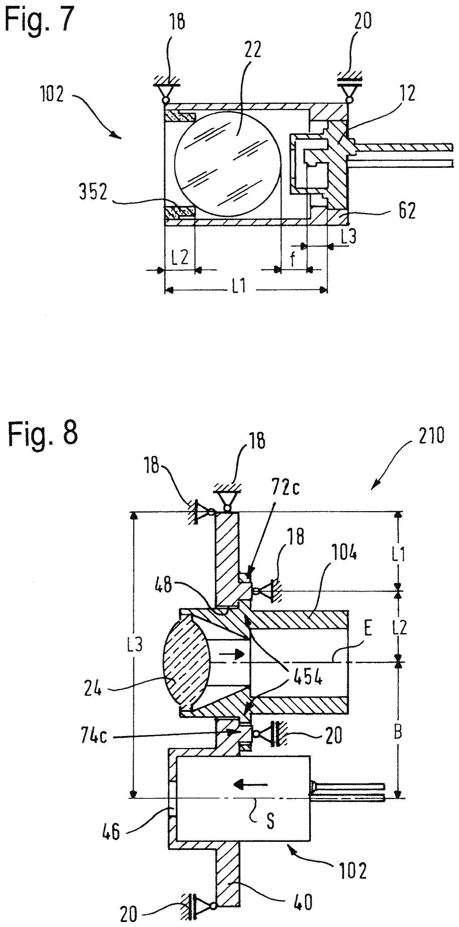

Mit Bezug nun auf Fig. 7 wird nachfolgend der Aufbau eines Sendemoduls 102 beschrieben. An einem Ende eines tubusförmig ausgestalteten Sendemodulgehäuses 62 ist der schematisch als Fotodiode dargestellte Lichtsender 12 angeordnet, wobei die Verbindung zwischen einem Gehäuse des Lichtsenders 12 und dem Sendemodulgehäuse 62 starr ausgeführt ist. Am anderen Ende des Sendemodulgehäuses 62 ist ein Sendemodul-Axialkompensationselement 352 befestigt, welches als Halterung oder Träger für die Sendeoptik 22 dient. Das Sendemodul-Axialkompensationselement 352 ist in der Axialrichtung Z wirksam und ermöglicht bei Temperaturänderungen eine Relativbewegung zwischen der Sendeoptik 22 und dem Sendemodul 62 bzw. dem Lichtsender 12. Um eine bezüglich der Axialrichtung Z schwimmende, eine Längenänderung des Sendemodulgehäuses 62 zulassende Lagerung des Sendemoduls 102 am Optikträger 40 zu gewährleisten, kann schematisch frontseitig im Bereich der Lichtaustrittsöffnung 46 (Fig. 8) ein Festlager 18 und endseitig im Bereich des Lichtsenders 12 ein Loslager 20 vorgesehen sein.

Wie in Fig. 8 dargestellt ist, sind das Sendemodul 102 und das Empfangsmodul 104 (vereinfacht bzw. unvollständig dargestellt) an einem gemeinsamen Optikträger 40 angeordnet. Der Optikträger 40 kann über Festlager und Loslager mit einem Sensorgehäuse (nicht dargestellt) der Sensoranordnung 210 bezüglich der Versatzrichtung Y schwimmend verbunden sein, wobei die schwimmende Lagerung entsprechend der mit Bezug auf Fig. 1 bis 3b erläuterten Kopplungsschnittstelle 70 ausgestaltet sein kann.

Temperaturbedingte Änderungen des Abstandes zwischen dem Lichtsender 12 und der Sendeoptik 22 werden mittels des Sendemodul-Axialkompensationselements 352 und temperaturbedingte Abstandsänderungen zwischen dem Lichtempfänger 14 und der Empfangsoptik 24 mittels des Empfangsmodul-Axialkompensationselements 354 kompensiert, so dass die genannten Abstände auch bei Temperaturänderungen im Wesentlichen konstant bleiben, wobei auch hier bei der Kompensation der genannten Abstandsänderungen temperaturbedingte Änderungen der Brennweiten der Sende- bzw. Empfangsoptik 22, 24 berücksichtigt werden können.

Das Sendemodul 102 ist auf der Seite der Lichtaustrittsöffnung 46 starr mit dem Optikträger 40 verbunden, so dass eine Relativbewegung zwischen dem Optikträger 40 und dem Sendemodul 102 weder in der Lateralrichtung Y noch in der Querrichtung X möglich ist. Eine Ausdehnung des Sendemodulgehäuses 62 entlang der Axialrichtung (entgegen der Lichtausbreitungsrichtung des Sendelichtpfads S) innerhalb der im Optikträger 40 ausgebildeten Vertiefung ist jedoch durch die mit Bezug auf Fig. 6 erläuterte, bezüglich der Axialrichtung Z schwimmende Lagerung gewährleistet.

Bei der Sensoranordnung 210 führen Temperaturänderungen auch zu einem Schrumpfen oder Ausdehnen des Optikträgers 40, wobei sich der Abstand zwischen der Lichteintrittsöffnung 46 und der Lichtaustrittsöffnung 48 ändert. Ohne entsprechende Kompensationsmaßnahmen würden sich bei starrer Ankopplung beider Module 102, 104 auch die Abstände zwischen der Sendeoptik 22 und der Empfangsoptik 24 sowie zwischen dem Lichtsender 12 und dem Lichtempfänger 14 um ein entsprechendes Maß verändern.

Um auch in der Versatzrichtung Y eine Längenänderungskompensation zu bewirken, ist das Empfangsmodul 104 bzw. das Empfangsmodulgehäuse 64 über ein Lateralkompensationselement 454 mit dem Optikträger 40 verbunden. Im vorliegenden Ausführungsbeispiel ist das Lateralkompensationselement 454 integral durch einen Gehäuseabschnitt des Empfangsmodulgehäuses 64 ausgebildet. Das Lateralkompensationselement 454 bzw. der korrespondierende Gehäuseabschnitt 64 ist in einem ersten Befestigungspunkt 72c mit Hilfe eines schematisch dargestellten Festlagers 18 starr mit dem Optikträger 40 und in einem zweiten Befestigungspunkt 74c mit Hilfe eines schematisch dargestellten Loslagers 20 bezüglich der Versatzrichtung Y beweglich mit dem Optikträger 40 verbunden. Die Kopplungsschnittstelle des Empfangsgehäuses 64 mit dem Optikträger 14 entspricht somit in ihrer Funktionalität der Kopplungsschnittstelle 70 der Sensoranordnung 10 (Fig. 1 bis 3C).

Die Materialien des Optikträgers 40 und des Lateralkompensationselements 454 bzw. des Empfangsmodulgehäuses 64 sind so gewählt, dass das Lateralkompensationselement 454 einen größeren thermischen Ausdehnungskoeffizienten besitzt als der Optikträger 40. Während sich bei einem durch Temperaturerhöhung bedingten Ausdehnen des Optikträgers 40 der Abstand zwischen der Lichtaustrittsöffnung 46 und der Lichteintrittsöffnung 48 um eine bestimmte Abstandsdifferenz vergrößert, wird durch das thermisch bedingte Ausdehnen des Lateralkompensationselements 454 das Empfangsmodul 104 relativ zum Optikträger 40 in Richtung des Sendemoduls 102 versetzt, wobei sich die Abstandsvergrößerung zwischen der Lichtaustrittsöffnung 46 und der Lichteintrittsöffnung 48 und der relative Versatz des Empfangsmoduls 104 bezüglich des Optikträgers 40 (bezogen auf den ersten Befestigungspunkt 72c) gegeneinander aufheben, so dass die Abstände zwischen dem Lichtsender 12 und dem Lichtempfänger 14 einerseits und der Sendeoptik 22 und der Empfangsoptik 24 andererseits jeweils im Wesentlichen konstant bleiben.

Nachfolgend wird die Bemessung der Kompensation von thermisch bedingten Längenänderungen einer Sensoranordnung beispielhaft für die Sensoranordnung 210 (Fig. 6 bis 8) erläutert, wobei diese Ausführungen auch in entsprechender Weise auf die Sensoranordnungen 10 und 110 (Fig. 1 bis 5) übertragen werden können. Hierfür werden idealisierte Randbedingungen angenommen, die unter anderem ein lineares thermisches Verhalten der Komponenten, eine homogene Temperaturverteilung, fehlende Reibung und fehlende innere Spannungen in den Komponenten vorsehen, wobei diese idealisierenden Annahmen die Genauigkeit der erfindungsgemäßen Kompensationsmethoden in einem nur geringen Ausmaß beeinflussen. Auch wenn die dargestellten Methoden ein idealisiertes Modell repräsentieren, wird damit gezeigt, dass eine Kompensation von thermisch bedingten Längen- und Abstandsänderungen in einer biaxialen Sensoranordnung möglich ist.

Für die mathematische Modellbildung werden folgende grundlegende Formeln verwendet.

Für die lineare Längenausdehnung $\Delta L$ eines Elements mit einer ursprünglichen Länge L und einem thermische Längenausdehnungskoeffizienten $\alpha$ bei einer Temperaturänderung $\Delta T$ gilt:

$$\Delta L = \alpha L \Delta T \qquad (1)$$

Für den opto-thermischen Ausdehnungskoeffizienten xf einer von Luft umgebenen Linse gilt (nach JAMIESON):

$$x_f = \alpha_{lens} - \frac{1}{n_{lens} - n_{air}}\left(\frac{dn_{lens}}{dT_{lens}} - n_{lens}\frac{dn_{air}}{dT_{air}}\right) \qquad (2)$$

wobei $\alpha_{lens}$ der thermische Längenausdehnungskoeffizient der Linse, $n_{lens}$ der Brechungsindex der Linse, $n_{air}$ der Brechungsindex von Luft, $dn_{lens}/dT_{lens}$ die Änderung des Brechungsindex der Linse über die Temperatur und $dn_{air}/dT_{air}$ die Änderung des Brechungsindex von Luft über die Temperatur ist. $x_f$ ist unabhängig von der geometrischen Linsenform, es ist eine Materialkonstante.

Für eine Fokuslängenänderung Δf der Linse über die Temperatur gilt:

$$\Delta f = x_f f \Delta T \qquad (3)$$

wobei f die Fokuslänge und ΔT die Temperaturänderung ist.

Über die Temperatur erfolgt eine Expansion oder Schrumpfung der einzelnen mechanischen Komponenten. Darüber hinaus verursacht die Materialkonstante xf eine Veränderung der jeweiligen Brennweite f der Optiken 22, 24, was auch in der Kompensation berücksichtigt werden sollte, wobei vereinfachend angenommen wird, dass jede der Optiken 22, 24 nur eine einzige Linse umfasst. Somit können dann die effektiven Längenausdehnungsketten erzeugt werden, die zur Ermittlung der Längen oder der Längenausdehnungskoeffizienten herangezogen werden.

Nachfolgend wird mit typischen Parametern zunächst die Brennweitenänderung über der Temperatur ermittelt und anschließend ein Kompensationsmechanismus für die Längenausdehnungen beschrieben. Es wird dabei beispielhaft von einer Temperaturänderung ΔT von 20°C auf 60°C ausgegangen.

Für eine Kunststoffoptik (BFL) mit den Parametern

$f_{BFL}$ = 6,30 mm bei einer Wellenlänge von 650 nm,
$n_{air}$ = 1,00027625 bei einer Wellenlänge von 656,3 nm,
$n_{lens}$ = 1,53856 bei einer Wellenlänge von 656,3 nm (für ein Cycloolefin-Copolymer-Linsenmaterial vom Typ APEL 5016SL),
$dn_{air}/dT_{air}$ = -0,87·$10^{-6}$/K bei einer Wellenlänge von 656,3 nm im Bereich von 20-40°C,
$dn_{lens}/dT_{lens}$ = -91·$10^{-6}$/K bei einer Wellenlänge von 656,3 nm im Bereich von 20-30°C,

$$\alpha = 56{,}5 \cdot 10^{-6}/K,$$

$$\Delta T = 40K \, (20°C \rightarrow 60°C)$$

ergibt sich mit Gleichung (2):

$$x_f = 56{,}5 \cdot 10^{-6} - \frac{1}{1{,}53856 - 1{,}00027625} \cdot \left[ -91 \cdot 10^{-6} - 1{,}53856(-0{,}87 \cdot 10^{-6}) \right] \qquad (4)$$

$$x_f = 223 \cdot 10^{-6}/K$$

Durch Einsetzen in Gleichung (3) kann die Brennweitenänderung $\Delta f_{BFL}$ über die Temperatur ermittelt werden:

$$\Delta f_{BFL} = 223 \cdot 10^{-6} \cdot 6{,}30 \cdot 40 = 0{,}056 \text{ mm} \qquad (5)$$

Das bedeutet, dass die Brennweite $\Delta f_{BFL}$ bei steigenden Temperaturen länger, bei sinkenden Temperaturen kürzer wird. Es wird vereinfachend angenommen, dass ΔfBFL = 0,06 mm kompensiert werden muss.

Mit Bezug auf Fig. 6 wird nun der Kompensationsmechanismus für den Empfangslichtpfad beschrieben. Es wird ersichtlich, dass sich die Längen L1 und L2 über Temperatur aus den Lagerpunkten der Lager ausgehend bei vergrößern oder vermindern. Das Empfangsmodul-Axialkompensationselement 354 erzeugt im Vergleich dazu eine negativ gerichtete Längenausdehnung ΔL3, die der Ausdehnung des Empfangsmodulgehäuses 64 entgegenwirkt. Diese sollen in Summe die Brennweitenänderung Δf über die Temperatur ergeben. Somit wird die Kompensation der Änderungen im Empfangslichtpfad gewährleistet. Die effektive Längenausdehnungskette lässt sich dementsprechend konstruieren:

Durch die Kompensation soll die Summe aller Längenausdehnungen Null sein, so dass gilt:

$$\Delta L1 + \Delta L2 - \Delta L3 - \Delta f = 0 \text{ bzw. nach Umstellen}$$

$$\Delta f = \Delta L1 + \Delta L2 - \Delta L3 \qquad (6)$$

Mit Hilfe eines linearen Gleichungssystems (LGS) mit drei Gleichungen lassen sich die erforderlichen Längen für die Kompensation ermitteln. Hierzu werden angenommene Längen und Längenausdehnungskoeffizienten in die Berechnung eingesetzt. Diese ergeben sich aus dem zur Verfügung stehenden Bauraum und einer Materialvorauswahl.

Durch Einsetzen der nach Gleichung (5) ermittelten und gerundeten Brennweitenänderung $\Delta f_{BFL} = 0{,}06$ mm in Gleichung (6) ergibt sich die erste Gleichung des LGS:

$$\Delta L1 + \Delta L2 - \Delta L3 = 0{,}06\text{mm} \qquad (7)$$

Gleichung (7) lässt sich unter Anwendung von Gleichung (1) schreiben als:

$$\alpha_1 L1 \Delta T + \alpha_1 L2 \Delta T - \alpha_2 L3 \Delta T = 0{,}06 \text{ mm} \qquad (8)$$

wobei $\alpha_1$ der Längenausdehnungskoeffizient des Empfangsmodulgehäuses 64 und $\alpha_2$ der Längenausdehnungskoeffizient des Empfangsmodul-Axialkompensationselements 354 ist.

Mit der Annahme, dass die Dicke des Trägermoduls 16 beziehungsweise der Elektronikkarte $t_{EK} = 1$ mm und der Abstand des empfängerseitigen Linsenscheitels vom Bezugspunkt für L1 $t_{lens}* = 1{,}5$ mm ist (wenn die Linse eine Gesamtdicke $t_{lens} = 4$mm und der symmetrisch positionierte Fassungsabschnitt $t_{LT} = 1$ mm aufweisen), ergibt sich die zweite Gleichung des LGS:

$$L1 + L2 - L3 - t_{EK} - t_{lens*} = f_{BFL} \text{ bzw. nach Einsetzen:}$$

$$L1 + L2 - L3 = 8{,}8\text{mm} \qquad (9)$$

Aus platztechnischen Gründen wird für L1 eine Länge von 4 mm angenommen, so dass sich die dritte Gleichung des LGS ergibt:

$$L1 = 4\text{mm} \qquad (10)$$

Die Gleichungen (8), (9) und (10) ergeben mit den angenommenen Werten folgendes LGS:

$$\begin{bmatrix} \alpha_1 & \alpha_1 & -\alpha_2 \\ 1 & 1 & -1 \\ 1 & 0 & 0 \end{bmatrix} \begin{bmatrix} L_1 \\ L_2 \\ L_3 \end{bmatrix} = \begin{bmatrix} \frac{\Delta f}{\Delta T} \\ 8{,}8 \\ 4 \end{bmatrix}$$

Nach Einsetzen der weiteren Parameter und mit einer Annahme für die Längenausdehnungskoeffizienten:

$\alpha_1 = 130 \cdot 10^{-6}/K$; für ein Polybutylenterephthalat-Material vom Typ VALOX 362
$\alpha_2 = 50 \cdot 10^{-6}/K$; für ein Polycarbonat-Material vom Typ MAKROLON 8025 gilt für das LGS:

$$\begin{bmatrix} 130 \cdot 10^{-6} & 130 \cdot 10^{-6} & -50 \cdot 10^{-6} \\ 1 & 1 & -1 \\ 1 & 0 & 0 \end{bmatrix} \begin{bmatrix} L_1 \\ L_2 \\ L_3 \end{bmatrix} = \begin{bmatrix} 0,0015 \\ 8,8 \\ 4 \end{bmatrix}$$

Für das LGS ergeben sich folgende Lösungen:

L1 = 4mm
L2 = 9,25mm
L3 = 4,45mm

Eine Gegenkontrolle mit Einsetzen der Lösungen in Gleichung (5) ergibt:

$$130 \cdot 10^{-6} \cdot 40 \cdot (4 + 9,25) - 50 \cdot 10^{-6} \cdot 40 \cdot 4,45 = 0,6$$

$$\sqrt{\phantom{0}} \, 0,06 = 0,06 \, \sqrt{\phantom{0}}$$

Wenn die Längen und ein Längenausdehnungskoeffizient $\alpha_{OT}$ (z.B. des Modulgehäuses 64) bekannt sind, lässt sich eine Umkehrung der Methode herleiten, mit welcher der erforderliche Längenausdehnungskoeffizient z. B. für das Empfangsmodul-Axialkompensationselement 354 ermittelt werden kann. Auf ein Zahlenbeispiel wird an dieser Stelle verzichtet. Das LGS wird wie folgt aufgestellt:

$$\begin{bmatrix} L_1 + L_2 & -L_3 \\ 1 & 0 \end{bmatrix} \begin{bmatrix} \alpha_1 \\ \alpha_2 \end{bmatrix} = \begin{bmatrix} \frac{\Delta f}{\Delta T} \\ \alpha_{OT} \end{bmatrix}$$

Wenn der Längenausdehnungskoeffizient $\alpha_1$ des Empfangsmodul-Axialkompensationselement 354 bekannt ist, wird die Berechnungsmatrix dementsprechend umgestellt:

$$\begin{bmatrix} L_1 + L_2 & -L_3 \\ 0 & 1 \end{bmatrix} \begin{bmatrix} \alpha_1 \\ \alpha_2 \end{bmatrix} = \begin{bmatrix} \frac{\Delta f}{\Delta T} \\ \alpha_{KE} \end{bmatrix}$$

Analog zu den vorstehenden Ausführungen erfolgt die Herleitung des axialen Kompensationsmechanismus für das Sendemodul 102.

Im Unterschied zur Empfangsoptik 24 besteht die Sendeoptik 22 hier zum Beispiel aus Glas. Dies ergibt ein anderes Verhalten der Brennweite über die Temperatur als bei Kunststofflinsen, wie das folgende Zahlenbeispiel zeigt:

Für eine Glasoptik (BFL) mit den Parametern

$f_{BFL}$ = 1,6542 mm bei einer Wellenlänge von 650 nm,
$n_{air}$ = 1,00027625 bei einer Wellenlänge von 656,3 nm,
$n_{lens}$ = 1,51432 bei einer Wellenlänge von 656,3 nm (für ein Glaslinsenmaterial vom Typ BK7),
$dn_{air}/dT_{air}$ = -0,87 $\cdot 10^{-6}$/K bei einer Wellenlänge von 656,3 nm im Bereich von 20-40°C,
$dn_{lens}/dT_{lens}$ = 2,75 $10^{-6}$/K bei einer Wellenlänge von 656,3 nm im Bereich von 20-40°C,

$$\alpha = 7{,}1 \cdot 10^{-6}/K,$$

$$\Delta T = 40K\ (20°C \rightarrow 60°C)$$

ergibt sich mit Gleichung (2):

$$x_f = 7{,}1 \cdot 10^{-6} - \frac{1}{1{,}51432 - 1{,}00027625} \tag{11}$$
$$\cdot \left[2{,}75 \cdot 10^{-6} - 1{,}51432(-0{,}87 \cdot 10^{-6})\right]$$
$$x_f = -0{,}8127 \cdot 10^{-6}/K$$

Somit kann die Brennweitenänderung über der Temperatur durch Einsetzen von xf in Gleichung (3) ermittelt werden:

$$\Delta f_{BFL} = -0{,}8127 \cdot 10^{-6} \cdot 1{,}6452 \cdot 40 = -0{,}0000535\ mm \tag{12}$$

Das bedeutet, dass die Brennweite bei steigenden Temperaturen minimal kürzer und bei sinkenden Temperaturen minimal länger wird. Es wird angenommen, dass $\Delta f_{BFL}$ = -0,0000535 mm kompensiert werden muss.

Die senderseitige Kompensation wird nun mit Bezug auf Fig. 7 erläutert. Dabei muss das Kompensationselement 352 eine Längenausdehnung erzielen, mit der die Summe aller Längenausdehnungen im Sendelichtpfad S zu Null wird. Die effektive Längenausdehnungskette ist demzufolge:

Die Summe aller Längenausdehnungen ergibt Null:

$$\Delta L1 - \Delta L2 + \Delta f - \Delta L3 = 0\ \text{bzw. nach Umstellen}$$
$$-\Delta L1 + \Delta L2 + \Delta L3 = \Delta f \tag{13}$$

Die meisten Dimensionen und Parameter können für die Berechnung aus bekannten Konstruktionen abgeleitet werden. Beispielhaft soll die erforderliche Länge L2 des Sendemodul-Axialkompensationselements 352 ermittelt werden, wenn ein mögliches Material hierfür vorläufig bereits ausgewählt wurde.

Gleichung (1) eingesetzt in Gleichung (13) ergibt:

$$-\alpha_1 L1 \Delta T + \alpha_2 L2 \Delta T + \alpha_1 L3 \Delta T = \Delta f \tag{14}$$

wobei $\alpha_1$ der Längenausdehnungskoeffizient des Sendemodulgehäuses 62 und $\alpha_2$ der Längenausdehnungskoeffizient des Sendemodul-Axialkompensationselements 352 ist. Nach Umstellung nach der Länge L2 des Sendemodul-Axialkompensationselements 352 gilt:

$$L_2 = \frac{\alpha_1}{\alpha_2}(L_1 - L_3) + \frac{\Delta f}{\Delta T \alpha_2} \qquad (15)$$

Mit den Annahmen:

L1 = 10,2mm,
L3 = 1,5mm,
$\alpha_1$ = 20·10⁻⁶/K für eine Metallegierung CuZn39Pb3,
$\alpha_2$ = 90·10⁻⁶/K für ein Polyamid-Material Grilamid TR55,
Δf = -0,0000535 mm
ΔT = 40K (20°C → 60°C)

ergibt sich durch Einsetzung in Gleichung (15):

$$L_2 = \frac{20 \cdot 10^{-6}}{90 \cdot 10^{-6}} \cdot (10,2 - 1,5) + \frac{(-0,0000535)}{40 \cdot 90 \cdot 10^{-6}}$$
$$L_2 \cong 1,92mm \qquad (16)$$

Eine Gegenkontrolle ergibt:

$$\Delta f \approx -\Delta L_1 + \Delta L_2 + \Delta L_3$$
$$-0,0000535 \approx 40 \cdot [90 \cdot 10^{-6} \cdot (-10,2 + 1,5)$$
$$+20 \cdot 10^{-6} \cdot 1,92]$$
$$-0,0000535 \approx -0,000048$$
$$\text{Nahezu gleich} \qquad (17)$$

Analog zu der Berechnung im Empfangslichtpfad E lässt sich bei bekannter Länge des Sendemodul-Axialkompensationselements 352 dessen Längenausdehnungskoeffizient ermitteln. Dazu wird Gleichung (14) umgestellt:

$$\alpha_2 = \frac{\alpha_1}{L_2}(L_1 - L_3) + \frac{\Delta f}{\Delta T} \qquad (18)$$

Nachfolgend wird mit Bezug auf Fig. 8 auf die Kompensation des Basisabstands B, d.h. des Abstands zwischen Sendeoptik 22 und Empfangsoptik 24, eingegangen.
Bei der Kompensation des Basisabstands B wird davon ausgegangen, dass der Basisabstand B und die erforderlichen Längen bekannt sind. Außerdem werden das Sende- und Empfangsmodul 62, 64 in einem Optikträger 40 montiert, der über eine Fest- und eine Loslagerung an einem nicht dargestellten Optikgehäuse befestigt ist. Zusätzlich wird das Empfangsmodul 64, wie vorstehend mit Bezug auf Fig. 8 beschrieben, ebenfalls mit einer Fest-Los-Lagerung versehen. Es soll der notwendige Längenausdehnungskoeffizient des Optikträgers 40 ermittelt werden.
Aufgrund der schematischen Darstellung wird die effektive Längenausdehnungskette ersichtlich:

Wenn die Basisabstandsänderung $\Delta B$ am Ende Null sein muss, ergibt sich folgende Gleichung:

$$\Delta L3 - (\Delta L1 + \Delta L2) = 0 \qquad (19)$$

Der Längenausdehnungskoeffizient des Optikträgers 40 wird durch Einsetzen von Gleichung (1) in Gleichung (19) ermittelt:

$$L_3 \alpha_2 \Delta T - (L_1 \alpha_2 \Delta T + L_2 \alpha_1 \Delta T) = 0$$

$$\alpha_2 = \frac{L_2 \alpha_1}{L_3 - L_1} \qquad (20)$$

wobei $\alpha_1$ der Längenausdehnungskoeffizient des Lateralkompensationselements 454 bzw. des Empfangsmodulgehäuses 64 und $\alpha_2$ der Längenausdehnungskoeffizient des Optikträgers 40 ist.

Mit den Annahmen:

L1 = 6,9 mm
L2 = 6,25 mm
L3 = 25,15 mm
$\alpha_1$ = 130 $10^{-6}$/K für ein Polybutylenterephthalat-Material Valox 362

$$\Delta T = 40K\ (20°C \rightarrow 60°C)$$

ergibt sich durch Einsetzung in Gleichung (20) der gesuchte Längenausdehnungskoeffizient $\alpha_2$ des Optikträgers 40:

$$\alpha_2 = \frac{6,25 \cdot 130 \cdot 10^{-6}}{25,15 - 6,9} = 44,5 \cdot 10^{-6}/K \qquad (21)$$

Als möglicher Werkstoff eignet sich für den Optikträger 40 beispielsweise MAKROLON 8025 mit einem Längenausdehnungskoeffizienten:

$$\alpha_2 = 45 \cdot 10^{-6}/K \qquad (22)$$

Eine Gegenkontrolle ergibt:

$$\alpha_2 \Delta T (L_3 - L_1) - \alpha_1 \Delta T L_2 \cong 0$$

$$45 \cdot 10^{-6} \cdot 40 \cdot (25,15 - 6,9) - 130 \cdot 10^{-6} \cdot 40 \cdot 6,25 \cong 0$$

$$0,0035 \approx 0$$

$$\text{Quasi Null}$$

Durch die Methode wird eine zweiachsige Kompensation von thermisch bedingten Längen-, Abstands- und Brennweitenänderungen in einer biaxialen Sensoranordnung, insbesondere einer Triangulationssensoranordnung, geschaffen. Der Fachmann wird erkennen, dass die vorstehend genannten Materialien, Dimensionen, Längen, Abstände, Brennweiten und andere quantitative Angabe rein beispielhaft sind und ohne weiteres in geeigneter Weise abgewandelt werden können.

Bezugszeichenliste

| 10, 110, 210 | optoelektronische Sensoranordnung |
| 12 | Lichtsensor |
| 14 | Lichtempfänger |
| 16, 16a | Trägermodul, Elektronikkarte |
| 18 | Festlager |
| 20 | Loslager |
| 22 | Sendeoptik |
| 24 | Empfangsoptik |
| 30, 32, 34 | Optikgehäuse |
| 40, 42, 44 | Optikträger |
| 46 | Lichtaustrittsöffnung |
| 48 | Lichteintrittsöffnung |
| 52, 54 | Kompensationselement |
| 152, 154 | Axialkompensationsabschnitt |
| 252, 254 | Lateralkompensationsabschnitt |
| 352 | Sendemodul-Axialkompensationselement |
| 354 | Empfangsmodul-Axialkompensationselement |
| 454 | Lateralkompensationselement |
| 62 | Sendemodulgehäuse |
| 64 | Empfangsmodulgehäuse |
| 70, 70a bis 70c | Kopplungsschnittstelle |
| 72, 72a bis 72c | erster Befestigungspunkt |
| 74, 74a bis 74c | zweiter Befestigungspunkt |
| 76a, 76b | Zapfen |
| 78 | Langloch |
| 80 | Bohrung |
| 82 | Verbindungsplatte |
| 90 | Befestigungsbereich |
| 102 | Sendemodul |
| 104 | Empfangsmodul |
| | |
| E | Empfangslichtpfad |
| S | Sendelichtpfad |
| X | Querrichtung |
| Y | Versatzrichtung |
| Z | Axialrichtung |
| I | Länge (in den Figuren als ℓ erkennbar) |

**Patentansprüche**

1. Optoelektronische Sensoranordnung (10, 110, 210) mit einem Lichtsender (12) zum Aussenden von Sendelichtsignalen in einen Überwachungsbereich, einer dem Lichtsender (12) zugeordneten Sendeoptik (22) zum Formen der Sendelichtsignale, einem ortsauflösenden Lichtempfänger (14) zum Empfangen von Empfangslichtsignalen aus dem Überwachungsbereich, welche durch Remission von auf ein im Überwachungsbereich vorhandenes Objekt auftreffenden Sendelichtsignalen erzeugt werden, einer dem Lichtempfänger (14) zugeordneten Empfangsoptik (24) zum Formen der Empfangslichtsignale, wobei der Lichtsender (12) und der Lichtempfänger (14) in einer Versatzrichtung (Y) seitlich voneinander beabstandet angeordnet sind, und zumindest einem Optikträger (40, 42, 44), wobei die Sendeoptik (22) und die Empfangsoptik (24) lateral entlang der Versatzrichtung (Y) voneinander beabstandet an dem Optikträger (40, 42, 44) angeordnet sind, wobei die Sendeoptik (22) an einem eine Lichtaustrittsöffnung (46) für die Sendelichtsignale aufweisenden Abschnitt des Optikträgers (40, 42, 44) und die Empfangsoptik (24) an einem eine Lichteintrittsöffnung (48) für die Empfangslichtsignale aufweisenden Abschnitt des Optikträgers (40, 42, 44) befestigt ist,
**dadurch gekennzeichnet,**
**dass** die Sensoranordnung (10, 110, 210) wenigstens ein Kompensationselement (52, 54, 352, 354, 454) aufweist, welches

- zwischen der Sendeoptik (22) und dem Lichtsender (12),

- zwischen der Empfangsoptik (24) und dem Lichtempfänger (14),
- zwischen dem Optikträger (40, 42, 44) und der Sendeoptik (22) und/oder
- zwischen dem Optikträger (40, 42, 44) und der Empfangsoptik (24) wirkend angeordnet ist, wobei das zumindest eine Kompensationselement (52, 54, 352, 354, 454) einen Längenausdehnungskoeffizienten aufweist und dazu eingerichtet ist, durch Temperaturänderungen der Sensoranordnung (10, 110, 210) verursachte

(i) Änderungen des Abstands zwischen der Sendeoptik (22) und dem Lichtsender (12),
(ii) Änderungen des Abstands zwischen der Empfangsoptik (24) und dem Lichtempfänger (14),
(iii) Änderungen des Abstands zwischen dem Lichtsender (12) und dem Lichtempfänger (14),
(iv) Änderungen des Abstands zwischen der Sendeoptik (22) und der Empfangsoptik (24),
(v) Änderungen der Brennweite der Sendeoptik (22) und/oder
(vi) Änderungen der Brennweite der Empfangsoptik (24)

derart zu kompensieren, dass sich der Auftreffort und/oder die Größe eines Empfangslichtflecks, welcher von der Empfangsoptik (24) aus den Empfangssignalen auf dem Lichtempfänger (14) erzeugt wird, zumindest im Wesentlichen nicht ändert.

2. Sensoranordnung (10, 110, 210) nach Anspruch 1,

**dadurch gekennzeichnet,**
**dass** der Lichtsender (12) und der Lichtempfänger (14) auf einem gemeinsamen Trägermodul (16) angeordnet sind, und
**dass** die Sendeoptik (22) über ein erstes Kompensationselement (52, 54, 352, 354, 454) und die Empfangsoptik (24) über ein zweites Kompensationselement (52, 54, 352, 354, 454) an dem Optikträger (40, 42, 44) befestigt ist, wobei die Kompensationselemente (52, 54, 352, 354, 454) dazu eingerichtet sind, durch Temperaturänderungen der Sensoranordnung (10, 110, 210) verursachte Änderungen des Abstands zwischen dem Trägermodul (16) und dem Optikträger (40, 42, 44) derart zu kompensieren, dass der Abstand zwischen dem Lichtsender (12) und der Sendeoptik (22) und der Abstand zwischen dem Lichtempfänger (14) und der Empfangsoptik (24) zumindest im Wesentlichen konstant bleibt, und/oder
wobei die Kompensationselemente (52, 54, 352, 354, 454) dazu eingerichtet sind, durch Temperaturänderungen der Sensoranordnung (10, 110, 210) verursachte Änderungen des Abstands zwischen dem Lichtsender (12) und dem Lichtempfänger (14) und Änderungen des Abstands zwischen der Lichtaustrittsöffnung (46) und der Lichteintrittsöffnung (48) derart zu kompensieren, dass die Änderungen des Abstands zwischen der Sendeoptik (22) und der Empfangsoptik (24) zumindest im Wesentlichen gleich den Änderungen des Abstands zwischen dem Lichtsender (12) und dem Lichtempfänger (14) sind.

3. Sensoranordnung (10, 110, 210) nach Anspruch 2,
**dadurch gekennzeichnet,**
**dass** das erste und/oder das zweite Kompensationselement (52, 54, 352, 354, 454) aus einem Material hergestellt ist, dessen Längenausdehnungskoeffizient größer ist als der Längenausdehnungskoeffizient eines jeweiligen Materials, aus welchem das Trägermodul (16) und/oder der Optikträger (40, 42, 44) hergestellt ist.

4. Sensoranordnung (10, 110, 210) nach Anspruch 2 oder 3,
**dadurch gekennzeichnet,**
**dass** das erste und/oder das zweite Kompensationselement (52, 54, 352, 354, 454) einen jeweiligen Axialkompensationsabschnitt (152, 154) aufweist, welcher längs einer optischen Achse der jeweiligen zugeordneten Optik (22, 24) wirksam ist, wobei bevorzugt der Axialkompensationsabschnitt (152, 154) eine zylindrische Form aufweist und mit einem umlaufenden Randabschnitt der zugeordneten Optik (22, 24) zusammenwirkt.

5. Sensoranordnung (10, 110, 210) nach einem der Ansprüche 2 bis 4,
**dadurch gekennzeichnet,**
**dass** das erste und/oder das zweite Kompensationselement (52, 54, 352, 354, 454) einen jeweiligen Lateralkompensationsabschnitt (252, 254) aufweist, welcher quer zu einer optischen Achse der jeweiligen zugeordneten Optik (22, 24) wirksam ist, wobei bevorzugt der Lateralkompensationsabschnitt (252, 254) sich nur über einen Bruchteil, bevorzugt über weniger als die Hälfte, besonders bevorzugt über weniger als ein Viertel, des Umfangs eines umlaufenden Randabschnitts der zugeordneten Optik (22, 24) erstreckt.

6. Sensoranordnung (10, 110, 210) nach den Ansprüchen 4 und 5,

**dadurch gekennzeichnet,**
**dass** sich der Axialkompensationsabschnitt (152, 154) und der Lateralkompensationsabschnitt (252, 254) eines jeweiligen Kompensationselements (52, 54, 352, 354, 454) hinsichtlich eines Längenausdehnungskoeffizienten und/oder einer Längenänderungsrate voneinander und/oder bezüglich eines Längenausdehnungskoeffizienten und/oder einer Längenänderungsrate des Axialkompensationsabschnitts (152, 154) und/oder des Lateralkompensationsabschnitts (252, 254) eines anderen Kompensationselements (52, 54, 352, 354, 454) unterscheiden.

7.  Sensoranordnung (10, 110, 210) nach Anspruch 1,

    **dadurch gekennzeichnet,**
    **dass** der Lichtsender (12) und die Sendeoptik (22) in einem Sendemodulgehäuse (62) angeordnet sind, wobei das Sendemodulgehäuse (62) über ein zugeordnetes, als Sendemodul-Axialkompensationselement (352) ausgebildetes Kompensationselement, welches längs einer optischen Achse der Sendeoptik (22) wirksam ist, mit dem Lichtsender (12) oder der Sendeoptik (22) verbunden ist, und/oder
    **dass** der Lichtempfänger (14) und die Empfangsoptik (24) in einem Empfangsmodulgehäuse (64) angeordnet sind, wobei das Empfangsmodulgehäuse (64) über ein zugeordnetes, als Empfangsmodul-Axialkompensationselement (354) ausgebildetes Kompensationselement, welches längs einer optischen Achse der Empfangsoptik (24) wirksam ist, mit dem Lichtempfänger (14) oder der Empfangsoptik (24) verbunden ist, wobei bevorzugt das oder die Axialkompensationselemente (352, 354) aus einem Material hergestellt sind, dessen Längenausdehnungskoeffizient größer ist als der Längenausdehnungskoeffizient eines jeweiligen Materials, aus welchem das zugeordnete Modulgehäuse (62, 64) hergestellt ist.

8.  Sensoranordnung (10, 110, 210) nach Anspruch 7,

    **dadurch gekennzeichnet,**
    **dass** das Sendemodulgehäuse (62) zumindest in Versatzrichtung (Y) starr bezüglich der Lichtaustrittsöffnung (46) an dem Optikträger (40, 42, 44) angeordnet ist und das Empfangsmodulgehäuse (64) über ein zugeordnetes, als Lateralkompensationselement (454) ausgebildetes Kompensationselement (52, 54, 352, 354, 454), welches quer zu einer optischen Achse der Empfangsoptik (24) wirksam ist, derart beweglich an dem Optikträger (40, 42, 44) angeordnet ist, dass das Lateralkompensationselement (454) mittels einer durch die Temperaturänderungen der Sensoranordnung (10, 110, 210) verursachten, in Versatzrichtung (Y) erfolgenden Relativbewegung zwischen der Empfangsoptik (24) und der Lichteintrittsöffnung (48) den Abstand zwischen der Sendeoptik (22) und der Empfangsoptik (24) zumindest im Wesentlichen konstant hält, oder
    **dass** das Empfangsmodulgehäuse (64) zumindest in Versatzrichtung (Y) starr bezüglich der Lichteintrittsöffnung (48) an dem Optikträger (40, 42, 44) angeordnet ist und das Sendemodulgehäuse (62) über ein zugeordnetes, als Lateralkompensationselement (454) ausgebildetes Kompensationselement (52, 54, 352, 354, 454), welches quer zu einer optischen Achse der Sendeoptik (22) wirksam ist, derart beweglich an dem Optikträger (40, 42, 44) angeordnet ist, dass das Lateralkompensationselement (454) mittels einer durch die Temperaturänderungen der Sensoranordnung (10, 110, 210) verursachten, in Versatzrichtung (Y) erfolgenden Relativbewegung zwischen der Sendeoptik (22) und der Lichtaustrittsöffnung (46) den Abstand zwischen der Sendeoptik (22) und der Empfangsoptik (24) zumindest im Wesentlichen konstant hält,
    wobei bevorzugt das Lateralkompensationselement (454) aus einem Material hergestellt ist, dessen Längenausdehnungskoeffizient größer ist als der Längenausdehnungskoeffizient eines Materials, aus welchem der Optikträger (40, 42, 44) hergestellt ist.

9.  Sensoranordnung (10, 110, 210) nach Anspruch 8,
    **dadurch gekennzeichnet,**
    **dass** das Lateralkompensationselement (454) an wenigstens einem ersten Befestigungspunkt (72, 72a, 72b, 72c) und an wenigstens einem in Versatzrichtung (Y) von dem ersten Befestigungspunkt (72, 72a, 72b, 72c) beabstandeten zweiten Befestigungspunkt (74, 74a, 74b, 74c) mit dem Optikträger (40, 42, 44) verbunden ist, wobei eine Verbindung zwischen dem Lateralkompensationselement (454) und dem Optikträger (40, 42, 44) in dem ersten Befestigungspunkt (72, 72a, 72b, 72c) zumindest in Versatzrichtung (Y) starr ist und in dem zweiten Befestigungspunkt (74, 74a, 74b, 74c) eine durch Temperaturänderungen der Sensoranordnung (10, 110, 210) verursachte Relativbewegung in Versatzrichtung (Y) zwischen dem Lateralkompensationselement (454) und dem Optikträger (40, 42, 44) zulässt.

10.  Sensoranordnung (10, 110, 210) nach Anspruch 8 oder 9,

**dadurch gekennzeichnet,**

**dass** das Lateralkompensationselement (454) durch einen Gehäuseabschnitt des zugeordneten Modulgehäuses (62, 64) gebildet ist.

11. Optoelektronische Sensoranordnung (10, 110, 210) mit einem Lichtsender (12) zum Aussenden von Sendelichtsignalen in einen Überwachungsbereich, einer dem Lichtsender (12) zugeordneten Sendeoptik (22) zum Formen der Sendelichtsignale, einem ortsauflösenden Lichtempfänger (14) zum Empfangen von Empfangslichtsignalen aus dem Überwachungsbereich, welche durch Remission von auf ein im Überwachungsbereich vorhandenes Objekt auftreffenden Sendelichtsignalen erzeugt werden, einer dem Lichtempfänger (14) zugeordneten Empfangsoptik (24) zum Formen der Empfangslichtsignale, wobei der Lichtsender (12) und der Lichtempfänger (14) in einer Versatzrichtung (Y) seitlich voneinander beabstandet auf einem gemeinsamen Trägermodul (16) angeordnet sind, und zumindest einem Optikgehäuse (30, 32, 34), welches mit dem Trägermodul (16) über zumindest eine mechanische Kopplungsschnittstelle (70, 70a, 70b, 70c) verbunden ist und einen Optikträger (40, 42, 44) aufweist, wobei die Sendeoptik (22) und die Empfangsoptik (24) lateral entlang der Versatzrichtung (Y) voneinander beabstandet an dem Optikträger (40, 42, 44) angeordnet sind,
**dadurch gekennzeichnet,**
**dass** die Kopplungsschnittstelle (70, 70a, 70b, 70c) wenigstens einen ersten und wenigsten einen in Versatzrichtung (Y) von dem ersten Befestigungspunkt (72, 72a, 72b, 72c) beabstandeten zweiten Befestigungspunkt (74, 74a, 74b, 74c) umfasst, wobei eine Verbindung zwischen dem Trägermodul (16) und dem zumindest einen Optikgehäuse (30, 32, 34) in dem ersten Befestigungspunkt (72, 72a, 72b, 72c) starr ist und in dem zweiten Befestigungspunkt (74, 74a, 74b, 74c) eine durch Temperaturänderungen der Sensoranordnung (10, 110, 210) verursachte Relativbewegung in Versatzrichtung (Y) zwischen dem Trägermodul (16) und dem zumindest einen Optikgehäuse (30, 32, 34) zulässt.

12. Sensoranordnung (10, 110, 210) nach Anspruch 11,

   **dadurch gekennzeichnet,**
   **dass** die Kopplungsschnittstelle (70, 70a, 70b, 70c) mehrere erste und mehrere zweite Befestigungspunkte (72, 72a, 72b, 72c, 74, 74a, 74b, 74c) umfasst, wobei die ersten Befestigungspunkte (72, 72a, 72b, 72c) ausschließlich senkrecht zur Versatzrichtung (Y) voneinander beabstandet sind und die zweiten Befestigungspunkte (74, 74a, 74b, 74c) senkrecht zur Versatzrichtung (Y) und/oder in der Versatzrichtung (Y) voneinander beabstandet sind,
   wobei bevorzugt
   das zumindest eine Optikgehäuse (30, 32, 34) ein die Sendeoptik (22) aufnehmendes erstes Optikgehäuse (32) mit einem ersten Optikträger (42) und ein die Empfangsoptik (24) aufnehmendes zweites Optikgehäuse (34) mit einem zweiten Optikträger (44) umfasst, und
   eine zwischen dem Trägermodul (16) und den Optikgehäusen (32, 34) angeordnete Verbindungsplatte (82) vorgesehen ist, wobei eine Verbindung zwischen dem Trägermodul (16) und der Verbindungsplatte (82) in dem zugeordneten ersten Befestigungspunkt (72, 72a, 72b, 72c) starr ist und in dem zugeordneten zweiten Befestigungspunkt (74, 74a, 74b, 74c) eine durch Temperaturänderungen der Sensoranordnung (10, 110, 210) verursachte Relativbewegung in Versatzrichtung (Y) zwischen dem Trägermodul (16) und der Verbindungsplatte (82) zulässt, und wobei eine jeweilige Verbindung zwischen der Verbindungsplatte (82) und dem jeweiligen Optikgehäuse (30, 32, 34) in dem ersten zugeordneten Befestigungspunkt (72, 72a, 72b, 72c) starr ist und in dem zweiten zugeordneten Befestigungspunkt (74, 74a, 74b, 74c) eine durch Temperaturänderungen der Sensoranordnung (10, 110, 210) verursachte Relativbewegung in Versatzrichtung (Y) zwischen der Verbindungsplatte (82) und dem jeweiligen Optikgehäuse (30, 32, 34) zulässt.

13. Sensoranordnung (10, 110, 210) nach Anspruch 11 und 12,
   **dadurch gekennzeichnet,**
   **dass** der wenigstens eine zweite Befestigungspunkt (74, 74a, 74b, 74c) jeweils ein sich in der Versatzrichtung (Y) erstreckendes Langloch (78) umfasst, in welcher ein Zapfen (76b) in Versatzrichtung (Y) versetzbar aufgenommen ist.

14. Optoelektronische Sensoranordnung (10, 110, 210) nach einem der Ansprüche 1 bis 6 und nach einem der Ansprüche 11 bis 13,
   wobei bevorzugt
   die Kompensationselemente (52, 54, 352, 354, 454) ferner dazu eingerichtet sind, zusätzlich die durch Temperaturänderungen der Sensoranordnung (10, 110, 210) verursachte Relativbewegung zwischen dem Trägermodul (16)

und dem Optikgehäuse (30, 32, 34) zu berücksichtigen.

15. Optoelektronische Sensoranordnung (10, 110, 210) nach einem der Ansprüche 1 bis 14,

**dadurch gekennzeichnet,**
**dass** der Lichtempfänger (14) ein Array von Empfangselementen aufweist, welches sich zumindest in einer Triangulationsrichtung erstreckt, wobei die Empfangsoptik (24) zum Erzeugen eines Lichtflecks aus den Empfangslichtsignalen auf dem Lichtempfänger (14) eingerichtet ist, wobei sich die Position des Lichtflecks auf dem Lichtempfänger (14) in der Triangulationsrichtung in Abhängigkeit von dem Abstand eines im Überwachungsbereich anwesenden Objekts zu der Sensoranordnung (10, 110, 210) ergibt, und wobei die Sensoranordnung (10, 110, 210) eine mit dem Lichtempfänger (14) verbundene Auswerteeinheit umfasst, welche dazu eingerichtet ist, den Abstand des Objekts zu der Sensoranordnung (10, 110, 210) auf der Grundlage der Position des Lichtflecks auf dem Lichtempfänger (14) zu ermitteln, oder
**dass** der Lichtsender (12) dazu eingerichtet ist, die Sendelichtsignale in Form von Lichtpulsen auszusenden, wobei die Sensoranordnung (10, 110, 210) eine mit dem Lichtsender (12) und dem Lichtempfänger (14) verbundene Auswerteeinheit umfasst, welche dazu eingerichtet ist, den Abstand des Objekts zu der Sensoranordnung (10, 110, 210) auf der Grundlage der Laufzeit eines jeweiligen Lichtpulses zwischen dem Aussenden und dem Empfangen zu ermitteln.

**Claims**

1. An optoelectronic sensor arrangement (10, 110, 210) comprising a light transmitter (12) for transmitting transmission light signals into a monitored zone; a transmission optics (22) associated with the light transmitter (12) for shaping the transmission light signals; a spatially resolving light receiver (14) for receiving reception light signals from the monitored zone that are generated by a remission of transmission light signals incident on an object present in the monitored zone; a reception optics (24) associated with the light receiver (14) for shaping the reception light signals, wherein the light transmitter (12) and the light receiver (14) are arranged laterally spaced apart from one another in a direction of displacement (Y); and at least one optics carrier (40, 42, 44), wherein the transmission optics (22) and the reception optics (24) are arranged laterally spaced apart from one another along the direction of displacement (Y) at the optics carrier (40, 42, 44), wherein the transmission optics (22) is fastened to a section of the optics carrier (40, 42, 44) that has a light exit opening (46) for the transmission light signals and the reception optics (24) is fastened to a section of the optics carrier (40, 42, 44) that has a light entry opening (48) for the reception light signals, **characterized in that**
the sensor arrangement (10, 110, 210) has at least one compensation element (52, 54, 352, 354, 454) which is arranged acting

   - between the transmission optics (22) and the light transmitter (12),
   - between the reception optics (24) and the light receiver (14),
   - between the optics carrier (40, 42, 44) and the transmission optics (22) and/or
   - between the optics carrier (40, 42, 44) and the reception optics (24), with the at least one compensation element (52, 54, 352, 354, 454) having a coefficient of linear expansion and being configured to compensate

      (i) changes in the distance between the transmission optics (22) and the light transmitter (12),
      (ii) changes in the distance between the reception optics (24) and the light receiver (14),
      (iii) changes in the distance between the light transmitter (12) and the light receiver (14),
      (iv) changes in the distance between the transmission optics (22) and the reception optics (24),
      (v) changes in the focal length of the transmission optics (22) and/or
      (vi) changes in the focal length of the reception optics (24),

   said changes being caused by temperature changes of the sensor arrangement (10, 110, 210), such that the place of incidence and/or the size of a reception light spot, which is produced on the light receiver (14) from the reception signals by the reception optics (24), at least substantially does/do not change.

2. A sensor arrangement (10, 110, 210) in accordance with claim 1, **characterized in that**

   the light transmitter (12) and the light receiver (14) are arranged on a common carrier module (16), and
   **in that** the transmission optics (22) is fastened to the optics carrier (40, 42, 44) via a first compensation element (52, 54, 352, 354, 454) and the reception optics (24) is fastened to the optics carrier (40, 42, 44) via a second compensation element (52, 54, 352, 354, 454),

with the compensation elements (52, 54, 352, 354, 454) being configured to compensate changes in the distance between the carrier module (16) and the optics carrier (40, 42, 44), said changes being caused by temperature changes of the sensor arrangement (10, 110, 210), such that the distance between the light transmitter (12) and the transmission optics (22) and the distance between the light receiver (14) and the reception optics (24) remain at least substantially constant, and/or

with the compensation elements (52, 54, 352, 354, 454) being configured to compensate changes in the distance between the light transmitter (12) and the light receiver (14) and changes in the distance between the light exit opening (46) and the light entry opening (48), said changes being caused by temperature changes of the sensor arrangement (10, 110, 210), such that the changes in the distance between the transmission optics (22) and the reception optics (24) are at least substantially equal to the changes in the distance between the light transmitter (12) and the light receiver (14).

3. A sensor arrangement (10, 110, 210) in accordance with claim 2,
**characterized in that**
the first and/or the second compensation element (52, 54, 352, 354, 454) is/are manufactured from a material whose coefficient of linear expansion is greater than the coefficient of linear expansion of a respective material from which the carrier module (16) and/or the optics carrier (40, 42, 44) is/are manufactured.

4. A sensor arrangement (10, 110, 210) in accordance with claim 2 or claim 3,
**characterized in that**
the first and/or the second compensation element (52, 54, 352, 354, 454) has/have a respective axial compensation section (152, 154) which is effective along an optical axis of the respective associated optics (22, 24), with preferably the axial compensation section (152, 154) having a cylindrical shape and cooperating with a peripheral marginal section of the associated optics (22, 24).

5. A sensor arrangement (10, 110, 210) in accordance with any one of the claims 2 to 4,
**characterized in that**
the first and/or the second compensation element (52, 54, 352, 354, 454) has/have a respective lateral compensation section (252, 254) which is effective transversely to an optical axis of the respective associated optics (22, 24), with preferably the lateral compensation section (252, 254) extending only over a fraction, preferably over less than half, particularly preferably over less than a quarter, of the periphery of a peripheral marginal section of the associated optics (22, 24).

6. A sensor arrangement (10, 110, 210) in accordance with claims 4 and 5,
**characterized in that**
the axial compensation section (152, 154) and the lateral compensation section (252, 254) of a respective compensation element (52, 54, 352, 354, 454) differ from one another with respect to a coefficient of linear expansion and/or a rate of change in length and/or with respect to a coefficient of linear expansion and/or a rate of change in length of the axial compensation section (152, 154) and/or the lateral compensation section (252, 254) of another compensation element (52, 54, 352, 354, 454).

7. A sensor arrangement (10, 110, 210) in accordance with claim 1,

**characterized in that**
the light transmitter (12) and the transmission optics (22) are arranged in a transmission module housing (62), with the transmission module housing (62) being connected to the light transmitter (12) or the transmission optics (22) via an associated compensation element which is configured as a transmission module axial compensation element (352) and which is effective along an optical axis of the transmission optics (22), and/or
**in that** the light receiver (14) and the reception optics (24) are arranged in a reception module housing (64), with the reception module housing (64) being connected to the light receiver (14) or the reception optics (24) via an associated compensation element which is configured as a reception module axial compensation element (354) and which is effective along an optical axis of the reception optics (24), with preferably the axial compensation element or elements (352, 354) being manufactured from a material whose coefficient of linear expansion is greater than the coefficient of linear expansion of a respective material from which the associated module housing (62, 64) is manufactured.

8. A sensor arrangement (10, 110, 210) in accordance with claim 7,

**characterized in that**
the transmission module housing (62) is rigidly arranged at the optics carrier (40, 42, 44) with respect to the light exit opening (46) at least in the direction of displacement (Y) and the reception module housing (64) is movably arranged at the optics carrier (40, 42, 44) via an associated compensation element (52, 54, 352, 354, 454), which is configured as a lateral compensation element (454) and which is effective transversely to an optical axis of the reception optics (24), such that the lateral compensation element (454) keeps the distance between the transmission optics (22) and the reception optics (24) at least substantially constant by means of a relative movement between the reception optics (24) and the light entry opening (48) taking place in the direction of displacement (Y), said relative movement being caused by the temperature changes of the sensor arrangement (10, 110, 210),
or
**in that** the reception module housing (64) is rigidly arranged at the optics carrier (40, 42, 44) with respect to the light inlet opening (48) at least in the direction of displacement (Y) and the transmission module housing (62) is movably arranged at the optics carrier (40, 42, 44) via an associated compensation element (52, 54, 352, 354, 454), which is configured as a lateral compensation element (454) and which is effective transversely to an optical axis of the transmission optics (22), such that the lateral compensation element (454) keeps the distance between the transmission optics (22) and the reception optics (24) at least substantially constant by means of a relative movement between the transmission optics (22) and the light exit opening (46) taking place in the direction of displacement (Y), said relative movement being caused by the temperature changes of the sensor arrangement (10, 110, 210),
with the lateral compensation element (454) preferably being manufactured from a material whose coefficient of linear expansion is greater than the coefficient of linear expansion of a material from which the optics carrier (40, 42, 44) is manufactured.

9. A sensor arrangement (10, 110, 210) in accordance with claim 8,
**characterized in that**
the lateral compensation element (454) is connected to the optics carrier (40, 42, 44) at at least one first fastening point (72, 72a, 72b, 72c) and at at least one second fastening point (74, 74a, 74b, 74c) which is spaced apart from the first fastening point (72, 72a, 72b, 72c) in the direction of displacement (Y), with a connection between the lateral compensation element (454) and the optics carrier (40, 42, 44) being rigid at least in the direction of displacement (Y) at the first fastening point (72, 72a, 72b, 72c) and allowing a relative movement, caused by temperature changes of the sensor arrangement (10, 110, 210), in the direction of displacement (Y) between the lateral compensation element (454) and the optics carrier (40, 42, 44) at the second fastening point (74, 74a, 74b, 74c).

10. A sensor arrangement (10, 110, 210) in accordance with claim 8 or claim 9,
**characterized in that**
the lateral compensation element (454) is formed by a housing section of the associated module housing (62, 64).

11. An optoelectronic sensor arrangement (10, 110, 210) comprising a light transmitter (12) for transmitting transmission light signals into a monitored zone; a transmission optics (22) associated with the light transmitter (12) for shaping the transmission light signals; a spatially resolving light receiver (14) for receiving reception light signals from the monitored zone that are generated by a remission of transmission light signals incident on an object present in the monitored zone; a reception optics (24) associated with the light receiver (14) for shaping the reception light signals, wherein the light transmitter (12) and the light receiver (14) are arranged laterally spaced apart from one another in a direction of displacement (Y) on a common carrier module (16); and at least one optics housing (30, 32, 34) which is connected to the carrier module (16) via at least one mechanical coupling interface (70, 70a, 70b, 70c) and which has an optics carrier (40, 42, 44), wherein the transmission optics (22) and the reception optics (24) are arranged laterally spaced apart from one another along the direction of displacement (Y) at the optics carrier (40, 42, 44),
**characterized in that**
the coupling interface (70, 70a, 70b, 70c) comprises at least one first fastening point and at least one second fastening point (74, 74a, 74b, 74c) spaced apart from the first fastening point (72, 72a, 72b, 72c) in the direction of displacement (Y), with a connection between the carrier module (16) and the at least one optics housing (30, 32, 34) being rigid at the first fastening point (72, 72a, 72b, 72c) and allowing a relative movement, caused by temperature changes of the sensor arrangement (10, 110, 210), in the direction of displacement (Y) between the carrier module (16) and the at least one optics housing (30, 32, 34) at the second fastening point (74, 74a, 74b, 74c).

**12.** A sensor arrangement (10, 110, 210) in accordance with claim 11,

**characterized in that**
the coupling interface (70, 70a, 70b, 70c) comprises a plurality of first and a plurality of second fastening points (72, 72a, 72b, 72c, 74, 74a, 74b, 74c), with the first fastening points (72, 72a, 72b, 72c) being spaced apart from one another solely perpendicular to the direction of displacement (Y) and the second fastening points (74, 74a, 74b, 74c) being spaced apart from one another perpendicular to the direction of displacement (Y) and/or in the direction of displacement (Y),
with, preferably,
the at least one optics housing (30, 32, 34) comprising a first optics housing (32), which receives the transmission optics (22) and which has a first optics carrier (42), and a second optics housing (34) which receives the reception optics (24) and which has a second optics carrier (44), and a connection plate (82) arranged between the carrier module (16) and the optics housings (32, 34) being provided, with a connection between the carrier module (16) and the connection plate (82) being rigid at the associated first fastening point (72, 72a, 72b, 72c) and allowing a relative movement, caused by temperature changes of the sensor arrangement (10, 110, 210), in the direction of displacement (Y) between the carrier module (16) and the connection plate (82) at the associated second fastening point (74, 74a, 74b, 74c), and with a respective connection between the connection plate (82) and the respective optics housing (30, 32, 34) being rigid at the first associated fastening point (72, 72a, 72b, 72c) and allowing a relative movement, caused by temperature changes of the sensor arrangement (10, 110, 210), in the direction of displacement (Y) between the connection plate (82) and the respective optics housing (30, 32, 34) at the second associated fastening point (74, 74a, 74b, 74c).

**13.** A sensor arrangement (10, 110, 210) in accordance with claim 11 or claim 12,
**characterized in that**
the at least one second fastening point (74, 74a, 74b, 74c) in each case comprises an elongate hole (78) which extends in the direction of displacement (Y) and in which a pin (76b) is displaceably received in the direction of displacement (Y).

**14.** An optoelectronic sensor arrangement (10, 110, 210) in accordance with any one of the claims 1 to 6 and in accordance with any one of the claims 11 to 13,
wherein, preferably,
the compensation elements (52, 54, 352, 354, 454) are further configured to additionally consider the relative movement, caused by temperature changes of the sensor arrangement (10, 110, 210), between the carrier module (16) and the optics housing (30, 32, 34).

**15.** An optoelectronic sensor arrangement (10, 110, 210) in accordance with any one of the claims 1 to 14,

**characterized in that**
the light receiver (14) has an array of reception elements which extends at least in a triangulation direction, with the reception optics (24) being configured to produce a light spot on the light receiver (14) from the reception light signals, with the position of the light spot on the light receiver (14) in the triangulation direction resulting in dependence on the distance of an object present in the monitored zone from the sensor arrangement (10, 110, 210), and with the sensor arrangement (10, 110, 210) comprising an evaluation unit which is connected to the light receiver (14) and which is configured to determine the distance of the object from the sensor arrangement (10, 110, 210) on the basis of the position of the light spot on the light receiver (14), or
**in that** the light transmitter (12) is configured to transmit the transmission light signals in the form of light pulses, with the sensor arrangement (10, 110, 210) comprising an evaluation unit which is connected to the light transmitter (12) and to the light receiver (14) and which is configured to determine the distance of the object from the sensor arrangement (10, 110, 210) on the basis of the time of flight of a respective light pulse between the transmission and the reception.

**Revendications**

**1.** Ensemble capteur optoélectronique (10, 110, 210) comprenant un émetteur de lumière (12) pour émettre des signaux lumineux d'émission dans une zone à surveiller, une optique d'émission (22) associée à l'émetteur de lumière (12) pour former les signaux lumineux d'émission, un récepteur de lumière (14) à résolution locale pour recevoir des signaux lumineux de réception provenant de la zone à surveiller, qui sont générés par renvoi de signaux lumineux d'émission arrivant sur un objet présent dans la zone à surveiller, une optique de réception (24) associée au récepteur de lumière (14) pour former les signaux lumineux de réception, l'émetteur de lumière (12) et le récepteur de lumière (14) étant disposés à distance latérale l'un de l'autre dans une direction de décalage (Y), et comprenant au moins un support d'optique (40, 42, 44), l'optique d'émission (22) et l'optique de réception (24) étant disposées sur le support d'optique (40, 42, 44) à distance l'une de l'autre latéralement le long de la direction de décalage (Y), l'optique d'émission (22) étant fixée sur une portion du support d'optique (40, 42, 44) présentant une ouverture de sortie de lumière (46) pour les signaux lumineux d'émission, et l'optique de réception (24) étant fixée sur une portion du support d'optique (40, 42, 44) présentant une ouverture d'entrée de lumière (48) pour les signaux lumineux de réception,

**caractérisé en ce que**
l'ensemble capteur (10, 110, 210) comprend au moins un élément de compensation (52, 54, 352, 354, 454) qui est disposé de manière à agir

- entre l'optique d'émission (22) et l'émetteur de lumière (12),
- entre l'optique de réception (24) et le récepteur de lumière (14),
- entre le support d'optique (40, 42, 44) et l'optique d'émission (22), et/ou
- entre le support d'optique (40, 42, 44) et l'optique de réception (24),

ledit au moins un élément de compensation (52, 54, 352, 354, 454) présentant un coefficient de dilatation longitudinale et étant conçu pour compenser

(i) des modifications de la distance entre l'optique d'émission (22) et l'émetteur de lumière (12),
(ii) des modifications de la distance entre l'optique de réception (24) et le récepteur de lumière (14),
(iii) des modifications de la distance entre l'émetteur de lumière (12) et le récepteur de lumière (14),
(iv) des modifications de la distance entre l'optique d'émission (22) et l'optique de réception (24),
(v) des modifications de la distance focale de l'optique d'émission (22), et/ou
(vi) des modifications de la distance focale de l'optique de réception (24),

qui sont dues à des variations de température de l'ensemble capteur (10, 110, 210),
de telle sorte que l'endroit d'incidence et/ou la taille d'un spot lumineux de réception, qui est généré par l'optique de réception (24) à partir des signaux de réception sur le récepteur de lumière (14), ne change au moins sensiblement pas.

2. Ensemble capteur (10, 110, 210) selon la revendication 1,

**caractérisé en ce que**
l'émetteur de lumière (12) et le récepteur de lumière (14) sont disposés sur un module porteur commun (16), et **en ce que** l'optique d'émission (22) est fixée au support d'optique (40, 42, 44) par l'intermédiaire d'un premier élément de compensation (52, 54, 352, 354, 454), et l'optique de réception (24) y est fixée par l'intermédiaire d'un deuxième élément de compensation (52, 54, 352, 354, 454),
les éléments de compensation (52, 54, 352, 354, 454) étant conçus pour compenser les modifications de la distance entre le module porteur (16) et le support d'optique (40, 42, 44), dues à des variations de température de l'ensemble capteur (10, 110, 210), de telle sorte que la distance entre l'émetteur de lumière (12) et l'optique d'émission (22) et la distance entre le récepteur de lumière (14) et l'optique de réception (24) restent au moins sensiblement constantes, et/ou
les éléments de compensation (52, 54, 352, 354, 454) étant conçus pour compenser les modifications de la distance entre l'émetteur de lumière (12) et le récepteur de lumière (14) et les modifications de la distance entre l'ouverture de sortie de lumière (46) et l'ouverture d'entrée de lumière (48), dues à des variations de température de l'ensemble capteur (10, 110, 210), de telle sorte que les modifications de la distance entre l'optique d'émission (22) et l'optique de réception (24) sont au moins sensiblement égales aux modifications de la distance entre l'émetteur de lumière (12) et le récepteur de lumière (14).

3. Ensemble capteur (10, 110, 210) selon la revendication 2,
**caractérisé en ce que**
le premier et/ou le deuxième élément de compensation (52, 54, 352, 354, 454) est fabriqué dans un matériau dont le coefficient de dilatation longitudinale est supérieur au coefficient de dilatation longitudinale d'un matériau respectif dans lequel le module porteur (16) et/ou le support d'optique (40, 42, 44) est fabriqué.

**4.** Ensemble capteur (10, 110, 210) selon la revendication 2 ou 3,
**caractérisé en ce que**
le premier et/ou le deuxième élément de compensation (52, 54, 352, 354, 454) présente une portion de compensation axiale respective (152, 154) qui agit le long d'un axe optique de l'optique associée respective (22, 24), la portion de compensation axiale (152, 154) ayant de préférence une forme cylindrique et coopérant avec une portion périphérique de bord de l'optique associée (22, 24).

**5.** Ensemble capteur (10, 110, 210) selon l'une des revendications 2 à 4,
**caractérisé en ce que**
le premier et/ou le deuxième élément de compensation (52, 54, 352, 354, 454) présente une portion de compensation latérale respective (252, 254) qui agit transversalement à un axe optique de l'optique associée respective (22, 24), de préférence la portion de compensation latérale (252, 254) ne s'étendant que sur une fraction, de préférence sur moins de la moitié, de manière particulièrement préférée sur moins d'un quart, de la circonférence d'une portion périphérique de bord de l'optique associée (22, 24).

**6.** Ensemble capteur (10, 110, 210) selon les revendications 4 et 5,
**caractérisé en ce que**
la portion de compensation axiale (152, 154) et la portion de compensation latérale (252, 254) d'un élément de compensation respectif (52, 54, 352, 354, 454) diffèrent l'une de l'autre en ce qui concerne un coefficient de dilatation longitudinale et/ou un taux de variation longitudinale et/ou en ce qui concerne un coefficient de dilatation longitudinale et/ou un taux de variation longitudinale de la portion de compensation axiale (152, 154) et/ou de la portion de compensation latérale (252, 254) d'un autre élément de compensation (52, 54, 352, 354, 454).

**7.** Ensemble capteur (10, 110, 210) selon la revendication 1,

**caractérisé en ce que**
l'émetteur de lumière (12) et l'optique d'émission (22) sont disposés dans un boîtier de module d'émission (62), le boîtier de module d'émission (62) étant relié à l'émetteur de lumière (12) ou à l'optique d'émission (22) par l'intermédiaire d'un élément de compensation associé, réalisé sous forme d'élément de compensation axiale de module d'émission (352), qui agit le long d'un axe optique de l'optique d'émission (22), et/ou
**en ce que** le récepteur de lumière (14) et l'optique de réception (24) sont disposés dans un boîtier de module de réception (64), le boîtier de module de réception (64) étant relié au récepteur de lumière (14) ou à l'optique de réception (24) par l'intermédiaire d'un élément de compensation associé, réalisé sous forme d'élément de compensation axiale de module de réception (354), qui est actif le long d'un axe optique de l'optique de réception (24), le ou les éléments de compensation axiale (352, 354) étant de préférence fabriqués dans un matériau dont le coefficient de dilatation longitudinale est supérieur au coefficient de dilatation longitudinale d'un matériau respectif dans lequel le boîtier de module associé (62, 64) est fabriqué.

**8.** Ensemble capteur (10, 110, 210) selon la revendication 7,

**caractérisé en ce que**
le boîtier de module d'émission (62) est disposé sur le support d'optique (40, 42, 44) de manière rigide par rapport à l'ouverture de sortie de lumière (46) au moins dans la direction de décalage (Y), et le boîtier de module de réception (64) est disposé de manière mobile sur le support d'optique (40, 42, 44) par l'intermédiaire d'un élément de compensation (52, 54, 352, 354, 454) associé, réalisé sous forme d'élément de compensation latérale (454) qui agit transversalement à un axe optique de l'optique de réception (24), de telle sorte que l'élément de compensation latérale (454) maintient au moins sensiblement constante la distance entre l'optique d'émission (22) et l'optique de réception (24) au moyen d'un mouvement relatif entre l'optique de réception (24) et l'ouverture d'entrée de lumière (48) provoqué par les variations de température de l'ensemble capteur (10, 110, 210) et s'effectuant dans la direction de décalage (Y),
ou
**en ce que** le boîtier de module de réception (64) est disposé sur le support d'optique (40, 42, 44) de manière rigide par rapport à l'ouverture d'entrée de lumière (48) au moins dans la direction de décalage (Y), et le boîtier de module d'émission (62) est disposé de manière mobile sur le support d'optique (40, 42, 44) par l'intermédiaire d'un élément de compensation (52, 54, 352, 354, 454) associé, réalisé sous forme d'élément de compensation latérale (454), qui agit transversalement à un axe optique de l'optique d'émission (22), de telle sorte que l'élément de compensation latérale (454) maintient au moins sensiblement constante la distance entre l'optique d'émission (22) et l'optique de réception (24) au moyen d'un mouvement relatif entre l'optique d'émission (22) et l'ouverture de sortie de lumière (46) provoqué par les variations de température de l'ensemble capteur (10, 110, 210) et s'effectuant dans la direction de décalage (Y),

de préférence, l'élément de compensation latérale (454) étant fabriqué dans un matériau dont le coefficient de dilatation longitudinale est supérieur au coefficient de dilatation longitudinale d'un matériau dans lequel le support d'optique (40, 42, 44) est fabriqué.

9. Ensemble capteur (10, 110, 210) selon la revendication 8,
**caractérisé en ce que**
l'élément de compensation latérale (454) est relié au support d'optique (40, 42, 44) en au moins un premier point de fixation (72, 72a, 72b, 72c) et en au moins un deuxième point de fixation (74, 74a, 74b, 74c) espacé du premier point de fixation (72, 72a, 72b, 72c) dans la direction de décalage (Y), une liaison entre l'élément de compensation latérale (454) et le support d'optique (40, 42, 44) en le premier point de fixation (72, 72a, 72b, 72c) étant rigide au moins dans la direction de décalage (Y) et permettant, en le deuxième point de fixation (74, 74a, 74b, 74c), un mouvement relatif dans la direction de décalage (Y) entre l'élément de compensation latérale (454) et le support d'optique (40, 42, 44) provoqué par des variations de température de l'ensemble capteur (10, 110, 210).

10. Ensemble capteur (10, 110, 210) selon la revendication 8 ou 9,
**caractérisé en ce que**
l'élément de compensation latérale (454) est formé par une portion de boîtier du boîtier de module (62, 64) associé.

11. Ensemble capteur optoélectronique (10, 110, 210) comprenant un émetteur de lumière (12) pour émettre des signaux lumineux d'émission dans une zone à surveiller, une optique d'émission (22) associée à l'émetteur de lumière (12) pour former les signaux lumineux d'émission, un récepteur de lumière (14) à résolution locale pour recevoir des signaux lumineux de réception provenant de la zone à surveiller, qui sont générés par renvoi de signaux lumineux d'émission arrivant sur un objet présent dans la zone à surveiller, une optique de réception (24) associée au récepteur de lumière (14) pour former les signaux lumineux de réception, l'émetteur de lumière (12) et le récepteur de lumière (14) étant disposés sur un module porteur commun (16) à distance latérale l'un de l'autre dans une direction de décalage (Y), et comprenant au moins un boîtier d'optique (30, 32, 34) qui est relié au module porteur (16) par l'intermédiaire d'au moins une interface de couplage mécanique (70, 70a, 70b, 70c) et qui présente un support d'optique (40, 42, 44), l'optique d'émission (22) et l'optique de réception (24) étant disposées sur le support d'optique (40, 42, 44) à distance l'une de l'autre latéralement le long de la direction de décalage (Y),
**caractérisé en ce que**
l'interface de couplage (70, 70a, 70b, 70c) présente au moins un premier point de fixation (72, 72a, 72b, 72c) et au moins un deuxième point de fixation (74, 74a, 74b, 74c) espacé du premier dans la direction de décalage (Y), une liaison entre le module porteur (16) et ledit au moins un boîtier d'optique (30, 32, 34) étant rigide en le premier point de fixation (72, 72a, 72b, 72c) et permettant, en le deuxième point de fixation (74, 74a, 74b, 74c), un mouvement relatif dans la direction de décalage (Y) entre le module porteur (16) et ledit au moins un boîtier d'optique (30, 32, 34) provoqué par des variations de température de l'ensemble capteur (10, 110, 210).

12. Ensemble capteur (10, 110, 210) selon la revendication 11,

**caractérisé en ce que**
l'interface de couplage (70, 70a, 70b, 70c) comprend plusieurs premiers et plusieurs deuxièmes points de fixation (72, 72a, 72b, 72c, 74, 74a, 74b, 74c), les premiers points de fixation (72, 72a, 72b, 72c) étant espacés les uns des autres exclusivement perpendiculairement à la direction de décalage (Y) et les deuxièmes points de fixation (74, 74a, 74b, 74c) étant espacés les uns des autres perpendiculairement à la direction de décalage (Y) et/ou dans la direction de décalage (Y),
et, de préférence,
ledit au moins un boîtier d'optique (30, 32, 34) comprend un premier boîtier d'optique (32), recevant l'optique d'émission (22) et présentant un premier support d'optique (42), et un deuxième boîtier d'optique (34) recevant l'optique de réception (24) et présentant un deuxième support d'optique (44), et
il est prévu une plaque de liaison (82) disposée entre le module porteur (16) et les boîtiers d'optique (32, 34), une liaison entre le module porteur (16) et la plaque de liaison (82) étant rigide en le premier point de fixation associé (72, 72a, 72b, 72c), et autorisant, en le deuxième point de fixation associé (74, 74a, 74b, 74c), un mouvement relatif dans la direction de décalage (Y) entre le module porteur (16) et la plaque de liaison (82), provoqué par des variations de température de l'ensemble capteur (10, 110, 210), et une liaison respective entre la plaque de liaison (82) et le boîtier d'optique respectif (30, 32, 34) étant rigide en le premier point de fixation associé (72, 72a, 72b, 72c) et autorisant, en le deuxième point de fixation associé (74, 74a, 74b, 74c), un mouvement relatif dans la direction de décalage (Y) entre la plaque de liaison (82) et le boîtier d'optique respectif (30, 32, 34), provoqué par des variations de température de l'ensemble capteur (10, 110, 210).

**13.** Ensemble capteur (10, 110, 210) selon les revendications 11 et 12,
**caractérisé en ce que**
ledit au moins un deuxième point de fixation (74, 74a, 74b, 74c) présente un trou oblong respectif (78) s'étendant dans la direction de décalage (Y), dans lequel un tenon (76b) est reçu de manière à pouvoir être décalé dans la direction de décalage (Y).

**14.** Ensemble capteur optoélectronique (10, 110, 210) selon l'une des revendications 1 à 6 et selon l'une des revendications 11 à 13,
dans lequel, de préférence,
les éléments de compensation (52, 54, 352, 354, 454) sont en outre conçus pour tenir compte en supplément du mouvement relatif entre le module porteur (16) et le boîtier d'optique (30, 32, 34) provoqué par les variations de température de l'ensemble capteur (10, 110, 210).

**15.** Ensemble capteur optoélectronique (10, 110, 210) selon l'une des revendications 1 à 14,

**caractérisé en ce que**
le récepteur de lumière (14) présente un réseau d'éléments de réception qui s'étend au moins dans une direction de triangulation, l'optique de réception (24) étant conçue pour générer un spot lumineux à partir des signaux lumineux de réception sur le récepteur de lumière (14), la position du spot lumineux sur le récepteur de lumière (14) dans la direction de triangulation étant fonction de la distance d'un objet présent dans la zone à surveiller par rapport à l'ensemble capteur (10, 110, 210), et l'ensemble capteur (10, 110, 210) comprenant une unité d'évaluation reliée au récepteur de lumière (14), qui est conçue pour déterminer la distance de l'objet par rapport à l'ensemble capteur (10, 110, 210) en se basant sur la position du spot lumineux sur le récepteur de lumière (14), ou
**en ce que** l'émetteur de lumière (12) est conçu pour émettre les signaux lumineux d'émission sous forme d'impulsions lumineuses, l'ensemble capteur (10, 110, 210) comprenant une unité d'évaluation reliée à l'émetteur de lumière (12) et au récepteur de lumière (14), laquelle est conçue pour déterminer la distance de l'objet par rapport à l'ensemble capteur (10, 110, 210) en se basant sur le temps de propagation d'une impulsion lumineuse respective entre l'émission et la réception.

Fig. 1

Fig. 2

# Fig. 3a

# Fig. 3b

# Fig. 4

Fig. 5

Fig. 6

## Fig. 7

## Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19933248 A1
- EP 3390964 B1